(19) Europäisches Patentamt
European Patent Office
Office européen des brevets

(11) **EP 3 064 562 B1**

(12) **EUROPEAN PATENT SPECIFICATION**

(45) Date of publication and mention of the grant of the patent:
**21.04.2021 Bulletin 2021/16**

(21) Application number: **14858335.4**

(22) Date of filing: **01.10.2014**

(51) Int Cl.:
***C09J 7/24*** *(2018.01)* ***C09J 7/22*** *(2018.01)*
***C09J 7/38*** *(2018.01)* ***C09J 133/08*** *(2006.01)*
***C08K 3/22*** *(2006.01)* ***C08L 23/08*** *(2006.01)*
***C09J 123/12*** *(2006.01)*

(86) International application number:
**PCT/JP2014/076264**

(87) International publication number:
**WO 2015/064282 (07.05.2015 Gazette 2015/18)**

# (54) SURFACE PROTECTION SHEET AND WATER-DISPERSED PRESSURE-SENSITIVE ADHESIVE COMPOSITION FOR SURFACE PROTECTION SHEET

OBERFLÄCHENSCHÜTZENDE FOLIE UND WASSERDISPERGIERTE HAFTMITTELZUSAMMENSETZUNG FÜR OBERFLÄCHENSCHÜTZENDE FOLIE

FEUILLE DE PROTECTION DE SURFACE ET COMPOSITION D'AGENT ADHÉSIF DISPERSÉ DANS DE L'EAU POUR FEUILLE DE PROTECTION DE SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2013 JP 2013224663**
**29.10.2013 JP 2013224664**

(43) Date of publication of application:
**07.09.2016 Bulletin 2016/36**

(73) Proprietor: **Nitto Denko Corporation**
**Ibaraki-shi, Osaka 567-8680 (JP)**

(72) Inventors:
- **UKEI, Natsuki**
  **Ibaraki-shi**
  **Osaka 567-8680 (JP)**
- **NISHIMURA, Izumi**
  **Ibaraki-shi**
  **Osaka 567-8680 (JP)**
- **MATSUMOTO, Chie**
  **Ibaraki-shi**
  **Osaka 567-8680 (JP)**
- **OKADA, Mika**
  **Ibaraki-shi**
  **Osaka 567-8680 (JP)**

(74) Representative: **Grünecker Patent- und Rechtsanwälte**
**PartG mbB**
**Leopoldstraße 4**
**80802 München (DE)**

(56) References cited:
**EP-A1- 1 586 593** **EP-A1- 2 365 044**
**EP-A1- 2 511 357** **EP-A2- 1 323 802**
**WO-A1-2013/080792** **JP-A- H10 114 887**
**JP-A- H11 323 266** **JP-A- 2002 249 740**
**JP-A- 2002 348 551** **JP-A- 2005 170 990**
**JP-A- 2010 163 526** **JP-A- 2011 021 207**
**JP-A- 2013 159 662** **JP-A- 2013 159 662**
**US-A1- 2007 231 571** **US-A1- 2009 120 325**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a surface protection sheet and a water-dispersed pressure-sensitive adhesive composition for surface protection sheets.

[Background Art]

For purposes such as prevention of surface damage in transporting, storing, aging and constructing articles (e.g. painted automobiles and their components, or metal plates such as steel plates and molded articles therefrom), techniques are known such as adhering protection sheets to the surfaces for protection. A surface protection sheet used for such purposes is generally constructed to have a pressure-sensitive adhesive (PSA) layer on one face of a substrate sheet (support substrate) so that it can provide protection when adhered via the PSA to a surface of an adherend (an object to be protected). Technical literatures related to surface protection sheets include Patent Documents 1 to 3. Patent Document 4 is a technical document related to a removable PSA. Examples of surface protection sheets comprising PSA layers formed from water-dispersed PSA compositions comprising acrylic polymers are disclosed in Patent Documents 5 to 12.

[Citation List]

[Patent Literature]

[Patent Document 1] Japanese Patent Application Publication No. H6-73352
[Patent Document 2] Japanese Patent Application Publication No. 2007-532744
[Patent Document 3] Japanese Patent Application Publication No. 2012-25921
[Patent Document 4] Japanese Patent Application Publication No. H10-114887
[Patent Document 5] EP 1 586 593 A1
[Patent Document 6] WO 2013/080792 A1
[Patent Document 7] JP 2013-159662 A
[Patent Document 8] EP 2 365 044 A1
[Patent Document 9] US 2007/231571 A1
[Patent Document 10] EP 1 232 802 A2
[Patent Document 11] EP 2 511 357 A1
[Patent Document 12] US 2009/120325 A1 [Summary of Invention]

[Technical Problem]

After serving the protective role, surface protection sheets are removed (released) from adherends. Thus, surface protection sheets require properties that allow removal from adherends without leaving residue of the surface protection sheets. Examples of requirements include leaving no residue of the PSA on adherend surfaces (leftover adhesive residue) and being of no cause for contamination of the adherend by migration of the PSA components. From the standpoint of facilitating removal of surface protection sheets, in a desirable surface protection sheet, the peel strength does not increase excessively while adhered on the adherend surface.

Incidentally, water-dispersed PSA compositions using acrylic polymer as the base polymer are preferable from the standpoint of reducing environmental stress because they use water as the dispersion medium for the PSA components. They are also advantageous in terms of reducing emission of volatile organic compounds (VOC) from PSA sheets formed with the compositions. Lately, there is also a tendency to prefer water-dispersed PSA compositions as PSA compositions for forming PSA layers in surface protection sheets as described above. With respect to conventional PSA sheets obtained by using such water-dispersed acrylic PSA compositions, there has been still room for improvement in applications requiring high levels of weatherability, such as associated with long-term outdoor storage of adherend to which the surface protection sheet is adhered. For instance, in some applications, they have been insufficient in abilities to minimize peel strength increase, to leave no adhesive residue on the adherend surface (anti-residue properties), to not contaminate the surface (low-contaminating properties), and so on.

The primary objective of this invention is to provide a surface protection sheet that comprises a PSA layer formed from a water-dispersed PSA composition comprising an acrylic polymer and exhibits excellent weatherability as

well as good anti-residue properties and low-contaminating properties. Another related objective is to provide a water-dispersed PSA composition that allows production of such a surface protection sheet.

This description provides a surface protection sheet that comprises a PSA layer and a support substrate supporting the PSA layer. The PSA layer is formed from a water-dispersed PSA composition comprising an acrylic polymer and a crosslinking agent.

The water-dispersed PSA composition for surface protection sheets disclosed herein comprises an acrylic polymer obtained by emulsion polymerization of a starting monomer mixture that satisfies the following:

comprising as a monomer A1 an alkyl acrylate with 6 to 9 alkyl carbons, accounting for at least 40 % by weight of all monomers;
comprising as a monomer A2 an alkyl (meth)acrylate having a homopolymer glass transition temperature of -50°C or higher and being represented by the next general formula (M):

$$CH_2=C(R^1)COOR^2 \qquad (M)$$

wherein in the formula (M), $R^1$ is a hydrogen atom or a methyl group, and $R^2$ is an alkyl group with 4 to 20 carbon atoms, wherein the homopolymer glass transition temperature is determined according to methods identified in the description, and wherein the total amount of monomers A1 and A2 accounts for 50 to 99.9 % by weight of all monomers; and
comprising as a monomer B a carboxy group-containing monomer, accounting for 0.1 to 5 % by weight of all monomers;
with the emulsion polymerization being carried out in the presence of an anionic surfactant $S_{AP}$ having a 1-propenyl or 2-propenyl group. The PSA composition further comprises a crosslinking agent.

Such a water-dispersed PSA composition can make a surface protection sheet that exhibits improved low-temperature properties. For instance, the surface protection sheet can be provided with an ability to suitably protect an adherend surface even in an application where it is adhered to the surface of the adherend (object to be protected) in an environment at a low temperature such as the outdoors during winter, etc. The use of the surfactant $S_{AP}$, which is the 1-propenyl or 2-propenyl group-containing anionic surfactant, can bring about stable emulsion polymerization of the starting monomer mixture. For instance, formation of aggregates can be inhibited during the polymerization. This is preferable from the standpoint of the productivity of the PSA composition disclosed herein and the ease of application when forming a PSA layer from the composition. The use of the surfactant $S_{AP}$ is advantageous also in view of the low-contaminating properties of a surface protection sheet obtained by using the PSA composition. The surfactant $S_{AP}$ can be used in an amount of, for instance, about 0.1 to 6 parts by weight relative to 100 parts by weight of the monomers.

As the surfactant $S_{AP}$, an ammonium salt can be preferably used. Such a surfactant $S_{AP}$ may prevent or reduce adhesive marks (marking) left on paint film associated with the surface protection sheet using the PSA composition.

The starting monomer mixture comprises as the monomer A2 an alkyl (meth)acrylate (monomer A2) according to formula (M) that has as R2 an alkyl group with 4 to 20 carbon atoms and has a glass transition temperature (Tg) of its homopolymer of -50 °C or higher. For instance, the monomer A2 copolymerized in the acrylic polymer may contribute to increase the anti-residue properties of the surface protection sheet obtained by using the PSA composition.

The acrylic polymer preferably has a Tg of -30 °C or lower. According to a PSA composition that comprises an acrylic polymer having such a copolymer composition, the surface protection sheet may be provided with greater low-temperature properties.

In a preferable embodiment, the acrylic polymer may be obtained from a starting monomer mixture in which the content of monomers having at least one (meth)acryloyl group per molecule exceeds 95 % by weight of all the monomers. The PSA composition that comprises an acrylic polymer having such a copolymer composition may be advantageous from the standpoint of the weatherability of the surface protection sheet obtained by using the composition.

This description provides a surface protection sheet comprising a PSA layer formed by using a water-dispersed PSA composition disclosed herein, and a support substrate supporting the PSA layer. Such a surface protection sheet may exhibit excellent low-temperature properties.

[Brief Description of Drawings]

Fig. 1 shows a cross-sectional diagram schematically illustrating an embodiment of the surface protection sheet according to this invention.

[Description of Embodiments]

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

As used herein, the "base polymer" of a PSA refers to a component that accounts for 50 % by weight or more (typically 70 % by weight or more) of rubbery polymer in the PSA. The rubbery polymer refers to a polymer that shows rubber elasticity in a room temperature range.

As used herein, the term "(meth)acryloyl" comprehensively refers to acryloyl and methacryloyl. Similarly, the terms "(meth)acrylate" and "(meth)acryl" comprehensively refer to acrylate and methacrylate, and acryl and methacryl, respectively.

As used herein, the term "acrylic monomer" refers to a monomer having at least one (meth)acryloyl group per molecule. In this description, the term "acrylic polymer" refers to a polymer comprising a monomer unit derived from an acrylic monomer. Typical examples of the acrylic polymer include a polymer in which an acrylic monomer accounts for 50 % by weight or more of the monomers (all monomers) corresponding to the composition of the acrylic polymer.

<Support Substrate>

As the support substrate in the art disclosed herein, can be used a resin film, paper, fabric, a rubber sheet, a foam sheet, metal foil, a composite of these, or the like. Examples of resin films include polyolefin (polyethylene, polypropylene, ethylene-propylene copolymers, etc.) resin films, polyester resin films, vinyl chloride resin films, vinyl acetate resin films, polyimide resin films, polyamide resin films, fluorinated resin films, cellophane, and the like. Examples of paper include Washi paper, kraft paper, glassine paper, high grade paper, synthetic paper, top-coated paper and the like. Examples of fabrics include woven fabrics and non-woven fabrics, etc., of a single species or a blend of various fibrous substances. Examples of fibrous substances include cotton, staple fiber, Manila hemp, pulp, rayon, acetate fibers, polyester fibers, polyvinyl alcohol fibers, polyamide fibers, polyolefin fibers, and the like. Examples of rubber sheets include natural rubber sheets, butyl rubber sheets, and the like. Examples of foam sheets include polyurethane foam sheets, polychloroprene foam sheets, and the like. Examples of metal foil include aluminum foil, copper foil, and the like.

The art disclosed herein can be applied preferably to a surface protection sheet using as its support substrate a resin sheet primarily comprising a resin content such as polyolefin, polyester (e.g., polyethylene terephthalate (PET)), or the like. Here, the resin sheet can be a resin film formed of (molded from) a composition primarily comprising a resin content such as exemplified above. The resin sheet is typically anon-porous resin film. The "non-porous resin film" here should be conceptually distinguished from the so-called non-woven and woven fabric (i.e., meaning to exclude non-woven and woven fabric).

An especially preferable application may be a surface protection sheet wherein the primary component of the resin content constituting the support substrate is a polyolefin-based resin. For instance, a preferable surface protection sheet comprises, as the support substrate or as a component of the support substrate, a plastic film (polyolefin resin film) formed by molding a sheet of a polyolefin resin material comprising one, two or more species selected from a group consisting of polyethylene (PE) resins and polypropylene (PP) resins at 50 % by weight or more in total.

As the support substrate of a surface protection sheet disclosed herein, a substrate comprising a polyolefin resin at 50 % by weight or more of the entire substrate and further comprising inorganic powder can be preferably used. As the support substrate or as a component thereof, it is preferable to use a plastic film (polyolefin resin film) formed by molding a sheet of a polyolefin resin material comprising one, two or more species selected from a group consisting of polyethylene (PE) resins and polypropylene (PP) resins at 50 % by weight or more in total.

[Polyolefin Resin]

The PP resin can be various types of polymer comprising propylene (propylene-based polymer). A preferable PP resin comprises propylene accounting for 20 % by weight or more of all the monomers.

For instance, the concept of PP resin regarded herein includes the following propylene-based polymers.

Propylene homopolymer (homopolypropylene) such as isotactic polypropylene, syndiotactic polypropylene and atactic polypropylene;

Random copolymer (random polypropylene) of propylene and other $\alpha$-olefin(s); typically, random copolymer of propylene and one, two or more species selected from ethylene and $\alpha$-olefins having 4 to 10 carbon atoms; preferably random copolymer formed from propylene as the primary monomer (a main monomer, i.e. a component accounting for 50 % by weight or more of all monomers, the same applies hereinafter); for instance, a random copolymer of 96 to 99.9 % (by mole) propylene and 0.1 to 4 % (by mole) other $\alpha$-olefin(s) (preferably ethylene and/or butene).

Copolymer (block polypropylene) obtained by block copolymerization of propylene and other α-olefin(s); typically, copolymer obtained by block copolymerization of propylene and one, two or more species selected from ethylene and α-olefins having 4 to 10 carbon atoms; preferably, a block polypropylene formed from polypropylene as the primary monomer, typically further comprising as a by-product a rubber formed from at least one among propylene and the other α-olefin(s); for instance, a block polypropylene comprising a block copolymer of 90 to 99.9 % (by mole) propylene and 0.1 to 10 % (by mole) other α-olefin(s) (preferably ethylene and/or butene) and further comprising as a by-product a rubber formed from at least one among propylene and the other α-olefin(s);
Copolymer of propylene and a monomer (functional monomer) having another functional group in addition to a polymerizing functional group; and copolymer of such a functional monomer and a propylene-based polymer.

The PP resin can be formed essentially of one, two or more species of such propylene-based polymer, or can be a thermoplastic olefin resin (TPO) or a thermoplastic elastomer (TPE) of a reactor blend type obtainable by copolymerizing a propylene-based polymer with a large amount of a rubber component, or of a dry blend type obtainable by mechanically dispersing the rubber component in a propylene-based polymer. Alternatively, it can be a PP resin comprising a copolymer of propylene and other monomer(s) (functional monomer) containing other functional group(s) in addition to a polymerizing functional group, a PP resin obtained by copolymerizing such a functional monomer with a propylene-based polymer, or the like.

The PE resin can be various types of polymer comprising ethylene (ethylene-based polymer). A preferable PE resin comprises ethylene accounting for more than 50 % by weight of all the monomers.

The ethylene-based polymer can be an ethylene homopolymer or a copolymer (random copolymer, block copolymer, etc.) of ethylene and other monomer(s). Favorable examples of the other monomer include α-olefins having 3 to 10 carbon atoms such as propylene, 1-butene (which can be a branched 1-butene), 1-hexene, 4-methyl-1-pentene and 1-octene. It can be a copolymer of ethylene and a monomer (functional monomer) containing other functional group(s) in addition to a polymerizable functional group, copolymer of such a functional monomer and an ethylene-based polymer, or the like. Examples of a copolymer of ethylene and a functional monomer include ethylene-vinyl acetate copolymers (EVA), ethylene-acrylic acid copolymers (EAA), ethylene-methacrylic acid copolymers (EMAA), ethylene-methyl acrylate copolymers (EMA), ethylene-ethyl acrylate copolymers (EEA), ethylene-methyl methacrylate copolymers (EMMA), and copolymers of ethylene and (meth)acrylic acid (i.e. acrylic acid and/or methacrylic acid) crosslinked by metal ions.

Examples of the PE resin include a high density polyethylene (HDPE), medium density polyethylene (MDPE), low density polyethylene (LDPE) and linear low density polyethylene (LLDPE). The density of the PE resin is not particularly limited, and it can be, for instance, about 0.9 g/cm$^3$ to 0.94 g/cm$^3$. Examples of preferable polyethylene resins include LDPE and LLDPE.

The polyolefin resin material may comprise, as its resin content, one, two or more species of polyolefin resin selected from a group consisting of PP resins and PE resins as those described above. It preferably comprises at least a PP resin as the polyolefin resin. For example, a preferable support substrate has a composition comprising 20 % by weight or more (preferably 30 % by weight or more) PP resin. Such a support substrate may be superior in terms of heat resistance, size stability, etc., as compared to, for instance, a support substrate having a composition wherein the polyolefin resin essentially formed of PE resin. It is also advantageous from the standpoint of the handling properties of the surface protection sheet, etc. This is particularly meaningful in an application where the surface protection sheet is expected to be applied or removed in an environment exposed to wind (e.g. in the outdoors).

As the support substrate of the surface protection sheet disclosed herein, it is preferable to use a polyolefin resin film in which a continuous structure (continuous phase) of PP resin is formed. With the surface protection sheet having such a support substrate, it is easier to prevent lifting of the surface protection sheet from the adherend surface caused by a thermal history such as temperature elevation of the adherend (object to be protected). In other words, it exhibits good anti-lifting properties. Thus, there are fewer chances of degradation of protection performance caused by the lifting and peeling of the surface protection sheet with the lifting being the starting point.

The support substrate may have a mono-layer structure or a multi-layer structure including two, three or more layers. When it has a layered structure, it is preferable that at least one layer comprises a continuous PP resin phase.

The polyolefin resin material may further comprise, as the resin content, other non-polyolefin resin(s). The optional resin component can be one, two or more species selected from, for instance, polyester resins such as polyethylene terephthalate (PET), polyamide resins, polycarbonate resins, polyurethane resins and acrylic resins. When these other non-polyolefin resins are used, their amounts used are not particularly limited. Usually, of the resin content in the support substrate, they account for suitably 40 % by weight or less, preferably 30 % by weight or less, more preferably 20 % by weight or less, or yet more preferably 10 % by weight or less. The art disclosed herein can be preferably implemented in an embodiment where the resin content is essentially formed of polyolefin resin (e.g. in an embodiment wherein 95 % by weight or more, or typically 98 % by weight or more of the resin content is polyolefin resin).

A preferable polyolefin resin material may be, but not particularly limited to, a resin material having a MFR (melt flow rate) in a range of approximately 0.5 g/10min to 80 g/10min (e.g., 0.5 g/10min to 10 g/10min). Herein, the MFR

refers to the value measured by method A at a temperature of 230 °C and an applied load of 21.18 N based on JIS K 7210.

[Inorganic Powder]

The support substrate can comprise an inorganic powder. For instance, a preferable support substrate comprises a resin content (e.g. resin content comprising 50 % by weight or more polyolefin resin) and an inorganic powder. The support substrate having such a composition can block lights such as UV rays with the inorganic powder and thereby inhibit photodegradation of the PSA layer and the support substrate itself. As the inorganic powder, oxides such as titanium dioxide, zinc oxide, magnesium oxide, alumina and silica; carbonates such as calcium carbonate; sulfates such as barium sulfate; and the like can be used. An inorganic powder capable of coloring the support substrate in white is preferable. According to the white surface protection sheet, for instance, temperature elevation of the adherend by sunlight irradiation can be reduced, whereby peel strength increase during the course of protection can be minimized to a greater extent.

A favorable example of the inorganic powder is titanium dioxide ($TiO_2$). The type of titanium dioxide is not particularly limited. For instance, titanium dioxide in any crystal form such as rutile, anatase and brookite can be used. In particular, rutile titanium dioxide is preferable. Titanium dioxide having coated particle surfaces can be used as well. The coating material of the titanium dioxide particles is not particularly limited. For instance, it can be an inorganic oxide such as silica, alumina and zinc oxide. Favorable examples include highly weather-resistant titanium dioxide (typically rutile titanium dioxide) having particle surfaces coated with Si-$Al_2O_3$, etc.

The average particle diameter of the inorganic powder is not particularly limited. From the standpoint of obtaining good light-blocking effects, the average particle diameter of the inorganic powder is preferably 150 nm or larger, or more preferably 180 nm or larger. On the other hand, from the standpoint of the dispersibility in the resin content, the average particle diameter of the inorganic powder is preferably 500 nm or smaller, or more preferably 400 nm or smaller.

From the standpoint of obtaining good light-blocking effects, the inorganic powder content in the support substrate is suitably 5 % by weight or more of the entire support substrate, preferably 6 % by weight or more, or more preferably 7 % by weight or more. In view of the strength and ease of molding of the support substrate, etc., the inorganic powder content is suitably 30 % by weight or less of the entire support substrate, preferably 20 % by weight or less, or more preferably 15 % by weight or less. For instance, it is preferable to use a support substrate comprising an inorganic powder at such a ratio with the rest being formed of the resin content.

As the support substrate, although not particularly limited to this, for instance, a substrate comprising 20 to 80 % by weight PP resin, 10 to 70 % by weight PE resin and 5 to 30 % by weight inorganic powder can be used.

To the support substrate, as necessary, known additives that can be used in support substrates for PSA sheets (typically, plastic films for PSA sheet support substrates) can be suitably added, such as weatherability enhancers (UV absorber, antioxidant, photostabilizer, etc.), antistatic agent and slip agent. Examples of photostabilizer include those containing benzotriazoles, hindered amines and benzoates as active ingredients. Examples of antioxidant include those containing alkylphenols, alkylene bisphenols, thiopropionic acid esters, organic phosphorous acid esters, amines, hydroquinones and hydroxylamines as active ingredients. These additives can be used solely as one species or in a combination of two or more species. The amounts of additives added can be about the same as usual amounts in support substrates for PSA sheets.

The thickness of the support substrate is not particularly limited and can be suitably selected in accordance with the purpose. For instance, a support substrate having a thickness of about 300 μm or less can be used. From the standpoint of the conformability to the adherend surface contour, etc., the thickness of the substrate can be, for instance, 200 μm or less, or it is suitably 100 μm or less, preferably 70 μm or less, or more preferably 50 μm or less. From the standpoint of the strength and handling properties, the thickness of the support substrate can be, for instance, 10 μm or grater, or it is suitably 15 μm or greater, preferably 20 μm or greater, more preferably 25 μm or greater, or yet more preferably 30 μm or greater. A large thickness of the support substrate can be advantageous in terms of the light-blocking properties, etc.

For instance, the thickness of the support substrate comprising 20 % by weight or more PP resin can be preferably selected in a range of 15 μm to 50 μm (preferably 20 μm to 45 μm, more preferably 25 μm to 40 μm). With such a support substrate, the surface protection sheet can be obtained, combining surface conformability and handling properties at a particularly high level.

The support substrate (e.g. polyolefin resin film) may be obtained by a heretofore known method by molding a sheet from a resin material that comprises a resin component, preferably an inorganic powder and other materials (additives, etc.) used as necessary. For example, the support substrate can be produced by suitably employing a heretofore known general film-forming method such as extrusion molding and inflation molding.

Of the support substrate, the face on the side to which the PSA layer is provided (PSA layer-side surface) may be subjected to a known or commonly used surface treatment such as corona discharge treatment, plasma treatment, UV ray irradiation, acid treatment, alkali treatment and primer coating. Such a surface treatment may increase the

adhesion between the support substrate and the PSA layer, that is, the anchoring of the PSA layer to the support substrate. It is preferable to apply a surface treatment so as to introduce a polar group such as hydroxy group (-OH) to the PSA layer-side surface of the support substrate. This can increase the anchoring of the PSA layer and further increase the anti-residue properties of the surface protection sheet.

The other face (back face) of the support substrate which is opposite from the PSA layer-side surface may be subjected, as necessary, to a surface treatment such as antistatic treatment, release treatment and water repellent treatment. The release treatment provided to the back face of the support substrate brings about effects such as facilitated unwinding of the surface protection sheet wound in a roll, etc.

<PSA Composition>

The surface protection sheet disclosed herein comprises a PSA layer formed from a water-dispersed PSA composition (typically an emulsion-based PSA composition) comprising an acrylic polymer and a crosslinking agent. The acrylic polymer may be obtained by emulsion polymerization of a starting monomer mixture in the presence of a surfactant $S_{AP}$, which is an anionic surfactant having a 1-propenyl or 2-propenyl group. The compositional ratio of monomers in the starting monomer mixture is typically reflected in the copolymerization ratio of these components in the acrylic polymer

[Monomer A]

The starting monomer mixture comprises as the monomer A a combination of two or more species and at least a combination of monomers A1 and A2 as further described below.

[Monomer B]

The starting monomer mixture comprises as the monomer B a carboxy group-containing monomer. The monomer B may be useful to introduce crosslinking points in the acrylic polymer or to increase the cohesiveness of the acrylic polymer. The monomer B may contribute to increase the anti-residue properties by increasing the tightness of adhesion (anchoring) of the PSA layer to the support substrate. Examples of carboxy group-containing monomers include ethylenic unsaturated monocarboxylic acids such as acrylic acid, methacrylic acid, crotonic acid, isocrotonic acid, carboxyethyl (meth)acrylate, carboxypentyl (meth)acrylate and 1-[2-(methacryloyloxy)ethyl]succinic acid; ethylenic unsaturated dicarboxylic acids such as maleic acid, fumaric acid, itaconic acid and citraconic acid as well as their anhydrides (e.g. maleic acid anhydride, itaconic acid anhydride). For the carboxy group-containing monomer, solely one species or a combination of two or more species can be used.

[Monomer C]

The starting monomer mixture may further comprise other monomer(s) (monomer C) as optional component(s) besides the monomers A and B. As the monomer C, solely one species or a combination of two or more species can be used among various monomers that are polymerizable with the monomers A and B.

Examples of compounds that can be used as the monomer C may include functional monomers such as those described below. These functional monomers may be useful for introducing crosslinking points into the acrylic polymer or for increasing the cohesiveness of the acrylic polymer.

Hydroxy group-containing monomers: e.g. hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and (4-hydroxymethylcyclohexyl)methyl acrylate; unsaturated alcohols such as vinyl alcohol and allyl alcohol;

Amide group-containing monomers: e.g. (meth)acrylamide; N,N-dialkyl(meth)acrylamides such as N,N-dimethyl(meth)acrylamide, N,N-diethyl(meth)acrylamide and N,N-dimethylaminopropyl(meth)acrylamide; N-monoalkyl(meth)acrylamides such as N-propyl(meth)acrylamides including N-isopropyl(meth)acrylamide and N-n-propyl(meth)acrylamide and N-butyl(meth)acrylamides including N-t-butyl (meth)acrylamide and N-n-butyl(meth)acrylamide; N-methylol(meth)acrylamide, N-methylolpropane (meth)acrylamide, N-methoxymethyl (meth)acrylamide, N-butoxymethyl (meth)acrylamide, diacetone (meth)acrylamide;

Imide group-containing monomers: e.g. N-isopropylmaleimide, N-cyclohexylmaleimide, itaconimide;

Amino group-containing monomers: e.g. aminoethyl (meth)acrylate, N,N-dimethylaminoethyl (meth)acrylate, N,N-dimethylaminopropyl (meth)acrylate, t-butylaminoethyl (meth)acrylate;

Epoxy group-containing monomers: e.g. glycidyl (meth)acrylate, methylglycidyl (meth)acrylate, allyl glycidyl ether;

Cyano group-containing monomers: e.g. acrylonitrile, methacrylonitrile;
Keto group-containing monomers: e.g. diacetone (meth)acrylamide, diacetone (meth)acrylate, vinyl methyl ketone, vinyl ethyl ketone, allyl acetoacetate, vinyl acetoacetate;
Monomers having nitrogen atom-containing rings: e.g. N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, N-(meth)acryloyl morpholine, N-(meth)acryloylpyrrolidone;
Alkoxysilyl group-containing monomers: e.g. (3-(meth)acryloxypropyl)trimethoxysilane, (3-(meth)acryloxypropyl)triethoxysilane, (3-(meth)acryloxypropyl)methyldimethoxysilane, (3-(meth)acryloxypropyl)methyldiethoxysilane.

Other examples of the compound that can be used as the monomer C include vinyl ester-based monomers such as vinyl acetate and vinyl propionate; aromatic vinyl compounds such as styrene, substituted styrenes (a-methylstyrene, etc.) and vinyltoluene; non-aromatic ring-containing (meth)acrylates such as cyclohexyl (meth)acrylate, t-butylcyclohexyl (meth)acrylate, cyclopentyl di(meth)acrylate and isobornyl (meth)acrylate; aromatic ring-containing (meth)acrylates such as aryl (meth)acrylates (e.g. phenyl (meth)acrylate, benzyl (meth)acrylate), aryloxyalkyl (meth)acrylate (e.g. phenoxyethyl (meth)acrylate), arylalkyl (meth)acrylate (e.g. benzyl (meth)acrylate); olefinic monomers such as ethylene, propylene, isoprene, butadiene and isobutylene; chlorine-containing monomers such as vinyl chloride and vinylidene chloride; isocyanate group-containing monomers such as 2-(meth)acryloxyethylisocyanate; alkoxy group-containing monomers such as methoxymethyl (meth)acrylate and ethoxyethyl (meth)acrylate; vinyl ether-based monomers such as methyl vinyl ether, ethyl vinyl ether and isobutyl vinyl ether.

Yet other examples of the compound that can be used as the monomer C include polyfunctional monomers. Specific examples of polyfunctional monomers include compounds having two or more (meth)acryloyl groups per molecule such as 1,6-hexanediol di(meth)acrylate, ethylene glycol di(meth)acrylate, pentaerythritol di(meth)acrylate, trimethylolpropane tri(meth)acrylate, dipentaerythritol hexa(meth)acrylate and methylene bisacrylamide. When using such a polyfunctional monomer, its amount used is not particularly limited. It is usually suitably 2 % by weight or less (more preferably 1 % by weight or less) of all the monomers.

The monomer A content in the total monomer content is 50 % by weight or greater, suitably 60 % by weight or greater, preferably 70 % by weight or greater, more preferably 80 % by weight or greater, or yet more preferably 85 % by weight or greater. The art disclosed herein can be preferably implemented, for instance, in an embodiment where the monomer A content in the total monomer content is 90 % by weight or greater (or even 95 % by weight or greater). The monomer A content in the total monomer content is 99.9 % by weight or less. From the standpoint of the anti-residue properties, etc., it is usually preferably 99.5 % by weight or less, or more preferably 99 % by weight or less.

The monomer B content in the total monomer content is typically 0.1 % by weight or greater. From the standpoint of the polymerization stability and dispersion stability, it is usually preferably 0.5 % by weight or greater, or more preferably 1 % by weight or greater. From the standpoint of inhibiting excessive peel strength increase, the monomer B content in the total monomer content is usually suitably 5 % by weight or less, or preferably 4 % by weight or less (e.g. 3 % by weight or less).

The amount of the monomer C used can be suitably selected in a range equal to or less than the amount obtained by subtracting the amounts (% by weight) of the monomers A and B from the total monomer content (100 % by weight). For instance, it can be selected so as not to exceed 49.9 % by weight of the total monomer content. The amount of the monomer C used is suitably selected so as not to exceed 35 % by weight of the total monomer content, preferably not to exceed 30 % by weight, or more preferably not to exceed 20 % by weight. The art disclosed herein can be preferably implemented in an embodiment where the monomer C is used in an amount of 0 % by weight or greater, but less than 15 % by weight of the total monomer content, for instance, 0 % by weight or greater, but less than 10 % by weight. The amount of the monomer C used being 0 % by weight of the total monomer content means at least that no monomer C is used intentionally.

Although not particularly limited to this, when using a monomer C, the monomer C content in the total monomer content can be, for instance, 0.1 % by weight or greater to favorably obtain the effects of the use of the monomer C. From the standpoint of obtaining greater effects, the monomer C content in the total monomer content is usually preferably 0.5 % by weight or greater, more preferably 1 % by weight or greater, or yet more preferably 3 % by weight or greater. In a preferable embodiment, the monomer C content in the total monomer content can be, for instance, 1 to 20 % by weight (more preferably 3 to 15 % by weight).

In a preferable embodiment of the art disclosed herein, the acrylic monomer content in the total monomer content constituting the acrylic polymer can be greater than 95 % by weight, but 100 % by weight or less. In other words, in a preferable acrylic polymer, the copolymerization ratio of the acrylic monomer is greater than 95 % by weight. A PSA comprising such an acrylic polymer as the base polymer and a surface protection sheet comprising the PSA may have particularly great weatherability. For instance, the occurrence of excessive peel strength increase, leftover adhesive residue, contamination, and so on can be better prevented when the adherend to which the surface protection sheet is adhered is stored outside for a long period or even when accelerated weathering test conditions are applied as described later in Examples, etc.

[Tg of Acrylic Polymer]

The acrylic polymer preferably has, but not particularly limited to, a composition that yields a glass transition temperature (Tg) of the polymer of 0 °C or lower. The Tg of the acrylic polymer is usually suitably -10 °C or lower, or preferably -20 °C or lower. From the standpoint of obtaining sufficient initial adhesion (initial low-temperature adhesion) even in a low-temperature environment such as the outdoors during winter, the Tg of the acrylic polymer is preferably -25 °C or lower, or more preferably -30 °C or lower. From the standpoint of reducing the increase in peel strength and the ease of application, the Tg of the acrylic polymer is usually suitably -55 °C or higher, or more preferably -50 °C or higher (e.g. -45 °C or higher, or even -40 °C or higher).
Here, the Tg of the acrylic polymer refers to the value determined by the Fox equation based on the Tg values of homopolymers of the respective monomers in the starting monomer mixture constituting the polymer and their weight fractions (copolymerization ratio by weight) in the total monomer content. Thus, the Tg of the acrylic polymer can be adjusted by suitably changing the types of monomers and their compositional ratio.
As the Tg values of the homopolymers, values given in known documents are used.
In particular, with respect to the monomers shown in Table 1, the values in the table are used as the Tg values of the respective homopolymers.

[Table 1]

Table 1

| | | | |
|---|---|---|---|
| 2-Ethylhexyl acrylate | -70 °C | n-Butyl methacrylate | 20 °C |
| n-Hexyl acrylate | -65 °C | Methyl methacrylate | 105 °C |
| n-Octyl acrylate | -65 °C | Acrylic acid | 106 °C |
| Isononyl acrylate | -60 °C | Methacrylic acid | 228 °C |
| n-Nonyl acrylate | -58 °C | Vinyl acetate | 32 °C |
| n-Butyl acrylate | -55 °C | Styrene | 100 °C |
| Ethyl acrylate | -20 °C | Isobornyl acrylate | 94 °C |
| Lauryl acrylate | 0 °C | Isobornyl methacrylate | 180 °C |
| 2-Ethylhexyl methacrylate | -10 °C | N-Isopropylacrylamide | 135 °C |
| Methyl acrylate | 8 °C | N-Acryloylmorpholine | 145 °C |

With respect to the Tg values of homopolymers other than the examples listed above, the values given in "Polymer Handbook" (3rd edition, John Wiley & Sons, Inc., Year 1989) are used.
When no values are given in the "Polymer Handbook" (3rd edition, John Wiley & Sons, Inc., Year 1989), values obtained by the following measurement method are used.
In particular, to a reaction vessel equipped with a thermometer, a stirrer, a nitrogen inlet and a condenser, are added 100 parts by weight of monomer, 0.2 part by weight of azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature, and a homopolymer solution having 33 % by mass solids content is obtained. Then, this homopolymer solution is applied onto a release liner by flow coating and allowed to dry to prepare a test sample (a sheet of homopolymer) of about 2 mm thickness. This test sample is cut out into a disc of 7.9 mm diameter and is placed between parallel plates; and while applying a shear strain at a frequency of 1 Hz using a rheometer (model name ARES available from TA Instruments, Japan), the viscoelasticity is measured in the shear mode over a temperature range of -70 °C to 150 °C at a heating rate of 5 °C/min; and the temperature value at the maximum of the loss modulus G" curve is taken as the Tg of the homopolymer.

[Monomer A1]

As the acrylic polymer in the art disclosed herein, a polymer in which 40 % by weight or more alkyl acrylate with 6 to 9 alkyl carbons (or "monomer A1" hereinafter) has been copolymerized is used. Of the monomer A, the monomer A1 is a compound having a hydrogen atom for $R^1$ and a $C_{6-9}$ alkyl group for $R^2$ in the general formula (M). The acrylic polymer having such a copolymer composition can be typically obtained by emulsion polymerization of a starting monomer mixture comprising a monomer A1 at such a ratio. For the monomer A1, solely one species or a combination of two or

more species can be used.

Specific examples of the monomer A1 include n-hexyl acrylate (Tg -65 °C), 2-ethylhexyl acrylate (Tg -70 °C), n-octyl acrylate (Tg -65 °C), n-nonyl acrylate(Tg -58 °C) and isononyl acrylate (Tg -60 °C). In particular, 2-ethylhexyl acrylate is preferable. For instance, the 2-ethylhexyl acrylate ratio in the monomer A1 can be greater than 50 % by weight, but 100 % by weight or less (preferably 70 to 100 % by weight).

The alkyl acrylate belonging to the monomer A1 is characterized by having a low homopolymer Tg (typically with Tg below -55 °C) as described above. The PSA composition comprising as the base polymer an acrylic polymer in which a large amount of a monomer A1 having such a low homopolymer Tg has been copolymerized may form a surface protection sheet that exhibits improved low-temperature properties. For instance, it may form a surface protection sheet that exhibits higher peel strength in the low-temperature low-speed peel strength measurement described later in Examples.

The surface protection sheet is expected to be used in an embodiment where it is adhered to an adherend (object to be protected) in the outdoors during winter. In such a case, with a surface protection sheet having poor low-temperature properties, there are concerns of issues such as peeling from the adherend surface caused by wind blow after its application, etc., degradation of protection performance due to a gap formed between itself and the adherend surface, and so on. The surface protection sheet formed with the PSA composition disclosed herein may tightly adhere to the adherend surface to provide suitable protection performance even in an application where it is adhered to the adherend in such a low-temperature environment.

The alkyl acrylate belonging to the monomer A1 has a relatively long alkyl group with 6 to 9 carbon atoms. By copolymerizing such a monomer A1 at least 40 % by weight, the surface protection sheet can be obtained with less chances of leaving adhesion marks (marking) on the adherend. The adherend may have a paint film (paint coat) on the surface. The paint film may be a urethane-based paint film formed, for instance, upon reaction of an acrylic polyol resin and a polyisocyanate resin. While how such an effect is obtained is not necessarily clear, it is thought, for instance, that the monomer A1 has a relatively low SP value among the alkyl acrylates (e.g. having an SP value lower than that of an alkyl acrylate with a fewer alkyl carbons) and this contributes in a favorable manner.

In this description, the SP value refers to the solubility parameter value determined from the basic structure of the compound by the method proposed by Fedors.

The amount of the monomer A1 used is 40 % by weight or more of the total monomer content. The amount of the monomer A1 used is typically 40 % to 95 % by weight. From the standpoint of obtaining greater low-temperature properties, the monomer A1 can be used in an amount of 45 % by weight or more of the total monomer content, 50 % by weight or more, or even greater than 50 % by weight. From the standpoint of the anti-residue properties, etc., it is usually suitably 95 % by weight or less, or preferably 90 % by weight or less. For reasons such as easy adjustment of the Tg of the acrylic polymer in the aforementioned preferable range and the likelihood of obtaining cohesiveness suited for increasing the anti-residue properties, the amount of the monomer A1 used is suitably in a range of 80 % by weight or less of the total monomer content, usually preferably 75 % by weight or less, or more preferably in a range of 70 % by weight or less (e.g. 65 % by weight or less).

[Monomer A2]

As the acrylic polymer in the art disclosed herein, a polymer in which an alkyl (meth)acrylate having 4 to 20 alkyl carbons and having a homopolymer Tg of -50 °C or higher (or "monomer A2" hereinafter) has been copolymerized is used. Of the monomer A, the monomer A2 is a compound having a hydrogen atom or methyl group for $R^1$ and a $C_{4-20}$ alkyl group for $R^2$ in the general formula (M) with a homopolymer Tg of -50 °C or higher. The acrylic polymer having such a copolymer composition can be typically obtained by emulsion polymerization of a starting monomer mixture comprising a monomer A2. For the monomer A2, solely one species or a combination of two or more species can be used.

The alkyl (meth)acrylate belonging to the monomer A2 has a homopolymer Tg higher than - 50 °C. Thus, by copolymerizing an alkyl (meth)acrylate having a lower Tg and the monomer A2, the Tg of the acrylic polymer can be adjusted to the preferable range. This can bring about the effect to reduce excessive peel strength increase. By adjusting the Tg with an alkyl (meth)acrylate belonging to the monomer A2, for instance, marking on the adherend surface (e.g. a surface having a paint film such as an acrylic paint film) tends to be reduced with the surface protection sheet having a PSA layer comprising the acrylic polymer as compared to an embodiment using an alkyl (meth)acrylate with three or fewer alkyl carbons instead of the monomer A2.

As for the monomer A2, the homopolymer Tg is preferably in a range of -40 °C to 60 °C, or more preferably in a range of -30 °C to 40 °C (e.g. -20 °C to 30 °C). Specific examples of a monomer A2 that can be preferably used include n-butyl methacrylate (Tg 20 °C), 2-ethylhexyl methacrylate (Tg - 10 °C) and lauryl acrylate (Tg 0 °C).

The amount of monomer A2 used can be selected within the aforementioned range of the amount of the monomer A used, and it is not particularly limited. The amount of the monomer A2 used can be, for instance, 5 % by weight or more of the total monomer content, or can be also 10 % by weight or more. From the standpoint of obtaining

the effect of the use of the monomer A2 to a greater extent, the amount of the monomer A2 used can be 20 % by weight or more of the total monomer content, also 30 % by weight or more, or even 35 % by weight or more. The monomer A2 is suitably used in a range of 60 % by weight or less (typically 59.9 % by weight or less, preferably 55 % by weight or less, e.g. 50 % by weight or less) of the total monomer content.

The monomers A1 and A2 are used in combination so that their total amount is in the aforementioned range of the amount of the monomer A. The amount of the monomer A2 used can be, for instance, 10 to 100 parts by weight relative to 100 parts by weight of the monomer A1. The art disclosed herein can be preferably implemented in an embodiment where, for instance, 30 to 95 parts by weight (typically 40 to 90 parts by weight, or preferably 50 to 85 parts by weight) of the monomer A2 is used to 100 parts by weight of the monomer A1.

From the standpoint of efficiently adjusting the Tg of the acrylic polymer, the starting monomer mixture may comprise as the monomer A1 or A2 an alkyl (meth)acrylate having a homopolymer Tg higher than 0 °C. Examples include t-butyl methacrylate, isobutyl methacrylate, n-butyl methacrylate and hexyl methacrylate. These alkyl (meth)acrylates can be used solely as one species or in a combination of two or more species. The amount of the alkyl (meth)acrylate with Tg above 0 °C used can be, but not particularly limited to, for instance, 5 to 55 % by weight of the total monomer content, or it is usually suitably 10 to 50 % by weight, or preferably 10 to 30 % by weight (e.g. 15 to 25 % by weight).

From the standpoint of efficiently adjusting the Tg of the acrylic polymer, the starting monomer mixture preferably comprises as the monomer A2 an alkyl (meth)acrylate that has 4 to 20 alkyl carbons and has a homopolymer Tg higher than 0 °C. Among compounds belonging to the monomer A2, a species having a homopolymer Tg of 0 °C or higher can be used as the alkyl (meth)acrylate (monomer A2c). Specific examples of the monomer A2c include t-butyl methacrylate, isobutyl methacrylate, n-butyl methacrylate and hexyl methacrylate. For the monomer A2c, solely one species or a combination of two or more species can be used. The amount of the monomer A2c used can be, but not particularly limited to, for instance, 10 to 55 % by weight of the total monomer content, or preferably 20 to 50 % by weight (e.g. 30 to 45 % by weight).

The starting monomer mixture may comprise a monomer (monomer D) that does not belong to any of the monomers A1, A2 and B. Among species of monomer A, examples of the monomer belonging to the monomer D include a monomer (monomer D1) that is not either a monomer A1 or A2 as well as a monomer C. The amount of the monomer D can be selected so as not to exceed, for instance, 59.9 % by weight of the total monomer content in a range equal to or less than the amount obtained by subtracting the amounts (% by weight) of the monomers A1, A2 and B from the total monomer content (100 % by weight). The amount of the monomer D (i.e. the combined amount of the monomers D1 and C) is usually selected so as suitably not to exceed 40 % by weight of the total monomer content, preferably not to exceed 20 % by weight, or more preferably not to exceed 10 % by weight. The monomer D may not be used necessarily. The art disclosed herein can be preferably implemented in an embodiment where the monomer D is used in an amount of 0 % by weight or greater, but less than 5 % by weight of the total monomer content. Here, the amount of the monomer D used being 0 % by weight of the total monomer content means at least that no monomer D is used intentionally.

[Monomer C1]

Although not particularly limited to this, as the acrylic polymer in the art disclosed herein, a polymer in which a monomer C having a homopolymer Tg of 60 °C or higher (or "monomer C1" hereinafter) has been copolymerized can be preferably used. Specific examples of a compound that can be used as the monomer C1 include cyclohexyl methacrylate, isobornyl acrylate, isobornyl methacrylate, N-isopropylacrylamide and N-acryloylmorpholine. A preferable monomer C1 has a homopolymer Tg of 80 °C or higher (typically 80 °C to 200 °C).

With the use of an acrylic polymer in which the monomer C1 is copolymerized, the anti-lifting properties of the surface protection sheet tends to improve. In this description, the "anti-lifting properties" refers to the capability of the surface protection sheet applied to an adhered to resist lifting from the adherend surface caused by outdoor exposure and environmental changes as in general weathering tests or by temperature changes (thermal history) and aging, etc. The level of lifting of the surface protection sheet can be determined by the anti-lifting test described later in Examples.

The amount of the monomer C1 used is not particularly limited. For instance, it can be selected in the aforementioned preferable range of the amount of the monomer C used. The amount of the monomer C1 used can be, for instance, 0.1 to 20 % by weight of the total monomer content, or it is usually preferably 1 to 20 % by weight or more preferably 3 to 15 % by weight (e.g. 5 to 12 % by weight).

[Emulsion Polymerization]

The acrylic polymer in the art disclosed herein may be obtained by emulsion polymerization of a starting monomer mixture comprising monomers as those described earlier. The embodiment of emulsion polymerization is not particularly limited. Various monomer supply methods, polymerization conditions, materials and the like similar to those for heretofore known general emulsion polymerization can be suitably used to carry out polymerization. As the monomer

supply method, for instance, any method can be used among an all-at-once supply method where all starting monomers are supplied at once, continuous supply method, portionwise supply method, and so on. The monomers can be partially or entirely mixed and emulsified in water with a surfactant and the resulting emulsion can be supplied to the polymerization vessel.

The polymerization temperature can be about 20 °C to 100 °C, or it is usually suitably about 40 °C to 80 °C.

Examples of the polymerization initiator include, but not limited to, azo-based initiators, peroxide-based initiators and redox-based initiators by the combination of a peroxide and a reducing agent. For the polymerization initiator, solely one species or a combination of two or more species can be used.

Examples of azo-based initiators include 2,2'-azobisisobutyronitrile, 2,2'-azobis[N-(2-carboxyethyl)-2-methylpropionamidine] hydrate, 2,2'-azobis(2-methylpropionamidine) disulfate salt, 2,2'-azobis(2-methylpropionamidine) dihydrochloride, 2,2'-azobis(2-methylpropionamidine) dihydrochloride, 2,2'-azobis[2-(5-methyl-2-imidazolin-2-yl)propane] dihydrochloride and 2,2'-azobis(N,N'-dimethylene isobutylamidine) dihydrochloride.

Examples of peroxide-based initiators include persulfates such as potassium persulfate and ammonium persulfate; benzoyl peroxide, t-butyl hydroperoxide, di-t-butyl peroxide, dicumyl peroxide, dilauroyl peroxide, di-n-octanoyl peroxide, di(4-methylbenzoyl) peroxide, t-butyl peroxybenzoate, t-butyl peroxyisobutyrate, t-hexyl peroxypivalate, t-butyl peroxypivalate, di(2-ethylhexyl) peroxydicarbonate, di(4-t-butylcyclohexyl) peroxydicarbonate, di-sec-butyl peroxydicarbonate, t-butyl peroxyneodecanoate, 1,1,3,3-tetramethyl butylperoxy-2-ethylhexanoate, 1,1-bis(t-butylperoxy)-3,3,5-trimethylcyclohexane, 1,1-bis(t-butylperoxy)cyclododecane, 1,1-bis(t-hexylperoxy)cyclohexane and hydrogen peroxide.

Examples of redox-based initiators include a combination of a peroxide and ascorbic acid (combination of hydrogen peroxide water and ascorbic acid, etc.), a combination of a peroxide and an iron(II) salt (combination of hydrogen peroxide water and an iron(II) salt, etc.), and a combination of a persulfate salt and sodium hydrogen sulfite.

The amount of the polymerization initiator used can be suitably selected in accordance with the type of initiator, monomer species (monomer composition), polymerization conditions, etc. The amount of the polymerization initiator used is usually suitably in a range of, for instance, about 0.001 to 0.5 part by weight to 100 parts by weight of the monomers, preferably in a range of 0.002 to 0.1 part by weight, or more preferably in a range of 0.005 to 0.05 part by weight.

The water-dispersed PSA composition in the art disclosed herein can be favorably prepared by using, but not particularly limited to, a water dispersion comprising particles of an acrylic polymer as described earlier (acrylic polymer particles) in an aqueous solvent. The acrylic polymer particles have an average particle diameter of preferably 0.01 μm to 1 μm or more preferably 0.05 μm to 0.8 μm, typically 0.1 μm to 0.5 μm (e.g. 0.1 μm to 0.3 μm). When the average particle diameter of acrylic polymer particles is excessively smaller than 0.01 μm, the viscosity of the water dispersion of the acrylic polymer particles may increase, making it difficult to obtain a smooth PSA layer when applying the composition. When the average particle diameter of acrylic polymer particles is far larger than 1 μm, the interparticle adhesion may decrease with a tendency to poorer anti-residue properties.

[Surfactant]

Emulsion polymerization of the starting monomers is carried out in the presence of a surfactant (emulsifier). The amount of the surfactant used is not particularly limited. In view of the polymerization stability, dispersion stability of the polymerization reaction mixture, anti-contaminating properties of the surface protection sheet, etc., the amount of the surfactant used in the emulsion polymerization is usually suitably about 0.1 to 10 parts by weight to 100 parts by weight of the total monomer content, or preferably about 0.5 to 5 parts by weight.

As the surfactant, solely one species or a combination of two or more species can be used.

The reactive surfactant is not particularly limited as far as it has a radically polymerizable functional group selected from a 1-propenyl group ($CH_3$-CH=CH-) and or a 2-propenyl group ($CH_2$=CH-$CH_2$-which may be called allyl group).

Examples of an anionic reactive surfactant include polyoxyethylene (allyloxymethyl) alkyl ether sulfates (e.g. ammonium salts), polyoxyethylene nonyl propenyl phenyl ether sulfates (e.g. ammonium salts), alkyl allyl sulfosuccinates (e.g. sodium salts), methacryloxy polyoxypropylene sulfuric acid ester salts (e.g. sodium salts), and polyoxyalkylene alkenyl ether sulfates (e.g. an ammonium salt having an isopropenyl group as the terminal alkenyl group). When the anionic reactive surfactant is forming a salt, the salt can be a metal salt such as sodium salt or a non-metal salt such as ammonium salt and amine salt.

Examples of a nonionic reactive surfactant include polyoxyethylene nonyl propenyl phenyl ether.

Commercially available reactive surfactants include products of Dai-ichi Kogyo Seiyaku Co., Ltd., under trade names AQUALON HS-10, AQUALON HS-1025, AQUALON HS-20, AQUALON KH-10, AQUALON KH-1025, AQUALON KH-05, AQUALON BC-0515, AQUALON BC-10, AQUALON BC-1025, AQUALON BC-20, AQUALON BC-2020, AQUALON RN-20, AQUALON RN-30 and AQUALON RN-50; products of ADEKA corporation, under trade names ADEKARIA SOAP SE-10N and ADEKARIA SOAP SR-1025; products of Kao Corporation, under trade names LATEMULE PD-104, LATEMULE PD-420, LATEMULE PD-430 and LATEMULE PD-450; products of Sanyo Chemical

Industries, Ltd., under trade names ELEMINOL JS-20 and ELEMINOL RS-3000; and a product of Nippon Nyukazai Co., Ltd., under trade name ANTOX MS-60.

Although not particularly limited to this, a reactive surfactant having an oxyethylene chain can be preferably used. The oxyethylene chain refers to a structure of repeating oxyethylene units, that is, a structural moiety represented by $-(C_2H_4O)_n-$, with n indicating the number of repeats of the oxyethylene unit. For instance, in a preferable reactive surfactant, the number of repeats, n, is about 5 to 30 (e.g. 8 to 25).

From the standpoint of the polymerization stability in the emulsion polymerization of the starting monomer mixture disclosed herein, a reactive surfactant having a 1-propenyl or 2-propenyl group is used. A preferable reactive surfactant has a 1-propenyl or 2-propenyl group and also an oxyethylene chain.

From the standpoint of the emulsifying ability, etc., an anionic reactive surfactant can be preferably used. When the anionic reactive surfactant is in a salt form, as the salt, a non-metal salt is preferable from the standpoint of preventing marking on the adherend surface (e.g. a paint film surface). In particular, an ammonium salt is preferable. While detailed reasons are not clear, the use of an ammonium salt tends to bring about greater anti-marking properties as compared to embodiments using other salts.

When using a nonionic reactive surfactant, more favorable results can be obtained by the combined use with other surfactant(s), such as an anionic reactive surfactant, anionic non-reactive surfactant and nonionic non-reactive surfactant.

By carrying out emulsion polymerization of the starting monomer mixture in the presence of a reactive surfactant having a radically polymerizable functional group, the reactive surfactant may undergo a reaction to be incorporated into the acrylic polymer. The reactive surfactant incorporated in the acrylic polymer is unlikely to bleed out to the PSA layer surface because its move within the PSA layer is limited. Accordingly, the use of the reactive surfactant can reduce bleed-out of a low molecular weight compound to the PSA layer surface. This is preferable from the standpoint of the low-contaminating properties of the surface protection sheet. From the standpoint of obtaining greater low-contaminating properties, it is preferable to apply an embodiment using solely a reactive surfactant as the surfactant for emulsion polymerization.

In the art disclosed herein, the emulsion polymerization can be preferably carried out in the presence of a surfactant $S_{AP}$ (i.e., an anionic surfactant having a 1-propenyl or 2-propenyl group). The surfactant $S_{AP}$ can be used solely as one species or in a combination of two or more species. In the emulsion polymerization of the starting monomer mixture that includes a relatively large amount of the monomer A1, it is particularly meaningful to use the surfactant $S_{AP}$. For instance, the surfactant $S_{AP}$ is used in emulsion polymerization of a starting monomer mixture that comprises the monomer A 1 accounting for at least 40 % by weight (typically 50 to 80 % by weight) of the total monomer content. The starting monomer mixture may further comprise a monomer B accounting for 1 to 5 % by weight of the total monomer content.

The monomer A1 has a relatively long alkyl group (an alkyl group with 6 to 9 carbons) and thus is more hydrophobic than an alkyl (meth)acrylate having a shorter alkyl group. The starting monomer mixture in the art disclosed herein comprises a relatively large amount of the monomer A1; and therefore, it may tend to become insufficient in dispersion stability in water during emulsion polymerization. Insufficient dispersion stability of the starting monomer mixture likely leads to formation of aggregates in the emulsion polymerization, for instance, likely giving rise to issues such as decreased filterability and lowering of the yield. This may obstruct the production of the PSA composition.

The present inventor has found out that for stable emulsion polymerization of a starting monomer mixture that comprises a relatively large amount of a monomer A1, propenyl group-containing anionic surfactants $S_{AP}$ specifically perform well among reactive surfactants. For instance, with propenyl group-containing anionic surfactants $S_{AP}$, formation of aggregation can be better prevented in emulsion polymerization as compared to nonionic surfactants and anionic surfactants having a non-propenyl radically polymerizable functional group (e.g. isopropenyl group and methacryloyl group). Propenyl group-containing anionic surfactants $S_{AP}$ are highly capable of bringing about stable emulsion polymerization of starting monomers. Thus, practically sufficient polymerization stability can be obtained with a smaller amount as compared to embodiments using other reactive surfactants. It is advantageous to be able to reduce the reactive surfactant usage in terms of obtaining yet greater low-contaminating properties, reducing the costs and so on.

Examples of the propenyl group-containing anionic surfactant $S_{AP}$ include polyoxyethylene (allyloxymethyl)alkyl ether sulfates (e.g. ammonium salts), polyoxyethylene nonyl-propenyl-phenyl ether sulfates (e.g. ammonium salts) and alkyl allyl sulfosuccinate (e.g. sodium salts). When the anionic reactive surfactant is in a salt form, the salt can be a metal salt such as sodium salt or a non-metal salt such as ammonium salt and ammine salt. From the standpoint of preventing marking on the adherend surface (e.g. a paint film surface), etc., anon-metal salt is preferable and an ammonium salt is particularly preferable. While detailed reasons are not clear, the use of an ammonium salt tends to bring about greater anti-marking properties as compared to embodiments using other salts.

Although not particularly limited to this, as the propenyl group-containing anionic surfactant $S_{AP}$, a species having an oxyethylene chain can be preferably used. Here, the oxyethylene chain refers to a structure of repeating oxyethylene units, that is, a structural moiety represented by $-(C_2H_4O)_m-$, with m indicating the number of repeats of the

oxyethylene unit. For instance, in a preferable reactive surfactant, the number of repeats, m, is about 5 to 30 (e.g. 8 to 25).

Examples of surfactants $S_{AP}$ that can be preferably used in the art disclosed herein include compounds having the structures represented by the following general formulas (1) to (4).

[Chem 1]

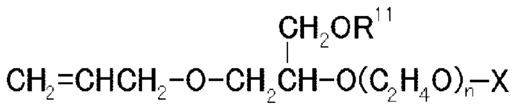

(1)

[Chem 2]

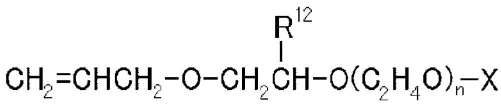

(2)

[Chem 3]

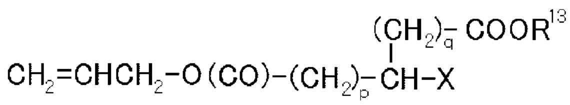

(3)

[Chem 4]

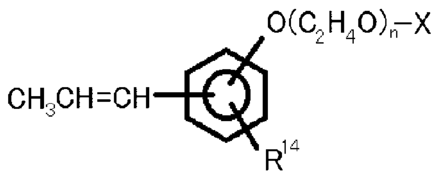

(4)

In the formulas (1) to (4), $R^{11}$ to $R^{14}$ are hydrocarbon groups (e.g. alkyl groups) and are typically alkyl groups with 6 to 18 (preferably 8 to 16, more preferably 8 to 14) carbon atoms; n is 1 or a larger integer, typically an integer from 5 to 30 (e.g. 8 to 25); p and q are individually 0, 1 or 2 with p + q being 0 to 2 (e.g. preferably a pair of p = 0 and q = 1, or a pair of p = 1 and q = 0); and X is either $-SO_3NH_4$ or $-SO_3Na$.

Commercial reactive surfactants $S_{AP}$ that can be preferably used in the art disclosed herein include products of Dai-ichi Kogyo Seiyaku Co., Ltd., under trade names AQUALON HS-10, AQUALON HS-1025, AQUALON HS-20, AQUALON KH-10, AQUALON KH-1025, AQUALON KH-05, AQUALON BC-0515, AQUALON BC-10, AQUALON BC-1025, AQUALON BC-20 and AQUALON BC-2020; products of ADEKA corporation, under trade names ADEKARIA SOAP SE-10N and ADEKARIA SOAP SR-1025; products of Sanyo Chemical Industries, Ltd., under trade names ELEMINOL JS-20 and the like.

The amount of the surfactant $S_{AP}$ used is not particularly limited. For instance, it is possibly 0.1 part by weight or greater to 100 parts by weight of the total monomer content or is usually suitably in a range of 0.1 to 10 parts by weight (typically 0.5 to 10 parts by weight). From the standpoint of carrying out the emulsion polymerization more stably, the amount of the surfactant $S_{AP}$ used to 100 parts by weight of the total monomer content is usually preferably 1 part by weight or grater, or more preferably 1.5 parts by weight or greater. From the standpoint of the low-contaminating properties, the amount of the surfactant $S_{AP}$ used to 100 parts by weight of the total monomer content is preferably 7 parts by weight or less, more preferably 6 parts by weight or less, or yet more preferably 5 parts by weight or less (e.g. 4 parts by weight or less). In a preferable embodiment, the amount of the surfactant $S_{AP}$ used to 100 parts by weight of the total monomer content can be 3 parts by weight or less (e.g. 2.5 parts by weight or less).

In the emulsion polymerization, a non-reactive surfactant can be used in combination with the propenyl group-containing anionic surfactant $S_{AP}$.

Examples of a non-reactive anionic surfactant include alkyl sulfates such as lauryl sulfate and octadecyl sulfate; aliphatic acid salts; alkyl benzene sulfonates such as nonyl benzene sulfonate and dodecyl benzene sulfonate; naphthalene sulfonates such as dodecyl naphthalene sulfonate; alkyl diphenyl ether disulfonates such as dodecyl diphenyl ether disulfonate; polyoxyethylene alkyl ether sulfates such as polyoxyethylene octadecyl ether sulfate and polyoxyethylene lauryl ether sulfate; polyoxyethylene alkyl phenyl ether sulfates such as polyoxyethylene lauryl phenyl ether sulfate; polyoxyethylene styrenated phenyl ether sulfate; sulfosuccinates such as lauryl sulfosuccinate and polyoxyethylene lauryl sulfosuccinate; polyoxyethylene alkyl ether phosphates; and polyoxyethylene alkyl ether acetates. When the anionic surfactant is forming a salt, the salt can be, for instance, a metal salt (preferably a monovalent metal salt) such as the sodium salt, potassium salt, calcium salt and magnesium salt; ammonium salt; amine salt, or the like.

Examples of a non-reactive nonionic surfactant include polyoxyethylene alkyl ethers such as polyoxyethylene lauryl ether and polyoxyethylene stearyl ether; polyoxyethylene alkyl phenyl ethers such as polyoxyethylene octyl phenyl ether and polyoxyethylene nonyl phenyl ether; sorbitan fatty acid esters such as sorbitan monolaurate, sorbitan monostearate and polyoxyethylene sorbitan monolaurate; polyoxyethylene glyceryl ether fatty acid esters; and polyoxyethylene-polyoxypropylene block copolymers.

When a non-reactive surfactant like these is used, its amount used is preferably 1 part by weight or less to 100 parts by weight of the total monomer content. From the standpoint of the low-contaminating properties, it is preferably 0.5 part by weight or less, or more preferably 0.1 part by weight or less. The art disclosed herein can be preferably practiced in an embodiment that uses no non-reactive surfactant.

In the emulsion polymerization, as far as the polymerization stability is significantly degraded, a propenyl group-free reactive surfactant can be used in combination with the propenyl group-containing anionic surfactant $S_{AP}$. Examples of commercially available propenyl group-free reactive surfactants include anionic reactive surfactants such as products of Kao Corporation, under trade names LATEMULE PD-104, LATEMULE PD-420, LATEMULE PD-430 and LATEMULE PD-450, a product of Sanyo Chemical Industries, Ltd., under trade name ELEMINOL RS-3000, and a product of Nippon Nyukazai Co., Ltd., under trade name ANTOX MS-60; and nonionic reactive surfactants such as products of Dai-ichi Kogyo Seiyaku Co., Ltd., under trade names AQUALON RN-20, AQUALON RN-30 and AQUALON RN-50. When using a reactive surfactant like these, its amount used is preferably 1 part by weight or less to 100 parts by weight of the total monomer content. From the standpoint of the polymerization stability, it is preferably 0.5 part by weight or less, or more preferably 0.1 part by weight or less. The art disclosed herein can be preferably practiced in an embodiment that uses no other reactive surfactant besides the surfactant $S_{AP}$.

In the emulsion polymerization, as necessary, various heretofore known chain transfer agents (which can be considered also as a molecular weight-adjusting agent or polymerization degree-adjusting agent) can be used. For the chain transfer agent, solely one species or a combination of two or more species can be used. As the chain transfer agent, mercaptans can be preferably used, such as n-dodecyl mercaptan, t-dodecyl mercaptan, glycidyl mercaptan, 2-mercaptoethanol, mercaptoacetic acid, thioglycolic acid, 2-ethylhexyl thioglycolate and 2,3-dimercapto-1-propanol. Examples of particularly preferable chain transfer agents include n-dodecylmercaptan and t-dodecyl mercaptan. When using a chain transfer agent, its amount used to 100 parts by weight of the total monomer content is, for instance, possibly about 0.01 to 1 part by weight, preferably 0.02 to 0.1 part by weight, or more preferably 0.03 to 0.07 part by weight. The art disclosed herein can be preferably practiced in an embodiment that uses no chain transfer agent.

The water-dispersed PSA composition in the art disclosed herein comprises an acrylic polymer obtained by emulsion polymerization and a crosslinking agent. Such a PSA composition can be prepared, for instance, by adding the crosslinking agent to a polymer emulsion in which particles of the acrylic polymer are dispersed in an aqueous solvent. As the polymer emulsion, it is possible to use a polymerization reaction mixture obtained by emulsion polymerization or the polymerization reaction mixture after subjected to a treatment as necessary such as pH adjustment (e.g. neutralization), adjustment of the non-volatile concentration, or the like. Usually, the dispersion stability of the emulsion can be increased by adjusting the pH to a suitable range (e.g. a pH range of about 6 to 9) by adding a neutralizing agent such as ammonia water to the polymerization reaction mixture. It is preferable to employ a method where the crosslinking agent is added after such pH adjustment.

This description provides a method for producing a water-dispersed PSA composition (typically a water-dispersed PSA composition for surface protection sheets), the method comprising a step of carrying out emulsion polymerization of the starting monomer mixture in the presence of a propenyl group-containing anionic surfactant $S_{AP}$ to obtain an acrylic polymer, and a step of adding a crosslinking agent to the polymerization reaction mixture obtained by the emulsion polymerization. The production method may comprise a step of adjusting the pH of the polymerization reaction mixture to about 6 to 9.

[Crosslinking Agent]

The type of crosslinking agent is not particularly limited. A suitable species can be selected and used among various crosslinking agents usually used in the PSA field. Specific examples include isocyanate-based crosslinking agents, silane-based crosslinking agents, epoxy-based crosslinking agents, oxazoline-based crosslinking agents, aziridine-based crosslinking agents, and metal chelate-based crosslinking agents. These can be used solely as one species

or in a combination of two or more species.

The amount of the crosslinking agent used can be suitably selected in view of the copolymer composition of the acrylic polymer, the structure of the crosslinking agent, the purpose of the use of crosslinking agent, the adhesive properties (e.g. peel strength) of the crosslinked PSA layer and so on. The amount of the crosslinking agent used is, but not particularly limited to, for instance, possibly about 0.01 to 15 parts by weight to 100 parts by weight of the acrylic polymer, usually suitably 0.5 to 10 parts by weight, or preferably 0.5 to 5 parts by weight.

Favorable examples of the crosslinking agent used in the art disclosed herein include oxazoline-based crosslinking agents, isocyanate-based crosslinking agents and epoxy-based crosslinking agents. These can be used solely as one species or in a combination of two or more species. The surface protection sheet obtained by using such a crosslinking agent may show little increase in peel strength and may be less likely to cause leftover adhesive residue and contamination on the adherend surface, for instance, even in such an application where the adherend to which the surface protection sheet is adhered is stored outside for a long period.

As the oxazoline-based crosslinking agent, a species having one or more oxazoline groups per molecule can be used without particular limitations. For the oxazoline-based crosslinking agent, solely one species or a combination of two or more species can be used. From the standpoint of using it in the water-dispersed PSA composition, a water-soluble or water-dispersible oxazoline-based crosslinking agent is preferable.

The oxazoline group can be either 2-oxazoline group, 3-oxazoline group or 4-oxazoline group. Usually, a 2-oxazoline group-containing oxazoline-based crosslinking agent can be preferably used. As the oxazoline-based crosslinking agent, a water-soluble copolymer or a water-dispersed copolymer can be used, which is obtained by copolymerizing an addition-polymerizable oxazoline such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline with other monomer(s).

Examples of a commercially available oxazoline-based crosslinking agent include products of Nippon Shokubai Co., Ltd., under trade names EPOCROS WS-500, EPOCROS WS-700, EPOCROS K-2010E, EPOCROS K-2020E and EPOCROS K-2030E.

From the standpoint of adding suitable cohesiveness to the PSA layer to obtain good anti-residue properties, to 1 equivalent of carboxy group in the acrylic polymer, the oxazoline-based crosslinking agent can be used in an amount that provides 0.1 equivalent of oxazoline group or more, preferably 0.15 equivalent or more, more preferably 0.2 equivalent or more, for instance, 0.3 equivalent or more. From the standpoint of obtaining good low-contaminating properties, the oxazoline-based crosslinking agent is used in an amount that provides preferably 5 equivalents of oxazoline group or less to 1 equivalent of carboxy group in the acrylic polymer, more preferably 3 equivalents or less, or yet more preferably 1 equivalent or less, for instance, 0.7 equivalent or less (typically 0.5 equivalent or less).

As the isocyanate-based crosslinking agent, a polyisocyanate-based crosslinking agent having two or more isocyanate groups can be used without particular limitations. The isocyanate groups in the isocyanate-based crosslinking agent may have protecting groups, forming isocyanate-forming functional groups (blocked isocyanates) whose isocyanate groups are temporarily protected, for instance, via treatment with a blocking agent, etc. For the isocyanate-based crosslinking agent, solely one species or a combination of two or more species can be used.

Examples of the isocyanate-based crosslinking agent include aromatic polyisocyanates such as tolylene diisocyanate and xylene diisocyanate; alicyclic isocyanates such as isophorone diisocyanate; and aliphatic polyisocyanates such as hexamethylene diisocyanate.

More specific examples include lower aliphatic polyisocyanates such as butylene diisocyanate and hexamethylene diisocyanate; alicyclic polyisocyanates such as cyclopentylene diisocyanate, cyclohexylene diisocyanate and isophorone diisocyanate; aromatic diisocyanates such as 2,4-tolylene diisocyanate, 4,4'-diphenylmethane diisocyanate, xylylene diisocyanate and polymethylene polyphenyl diisocyanate; isocyanate adducts such as trimethylolpropane/tolylene diisocyanate trimer adduct (e.g. trade name CORONATE L available from Nippon Polyurethane Industry Co., Ltd.), trimethylolpropane/hexamethylene diisocyanate trimer adduct (e.g. trade name CORONATE HL available from Nippon Polyurethane Industry Co., Ltd.) and hexamethylene diisocyanate isocyanurate (e.g. trade name CORONATE HX available from Nippon Polyurethane Industry, Co., Ltd.); polyisocyanates such as polyether polyisocyanate and polyester polyisocyanate; adducts of these polyisocyanates and polyols; and polyfunctionalization products of these polyisocyanates with isocyanurate bonds, biuret bonds, allophanate bonds, etc.

From the standpoint of the use in the water-dispersed PSA composition, an isocyanate-based crosslinking agent soluble or dispersible in water is preferable. For instance, a water-soluble, water-dispersible or self-emulsifying isocyanate-based crosslinking agent can be preferably used. Examples of commercial products of such isocyanate-based crosslinking agent (aqueous isocyanate-based crosslinking agent) include products of DIC Corporation under trade names BURNOCK DNW-5000, BURNOCK DNW-5010, BURNOCK DNW-5100, BURNOCK DNW-5200, BURNOCK DNW-5500and BURNOCK DNW-6000; products of Nippon Polyurethane Industry Co., Ltd., under trade names AQUANATE 100, AQUANATE 105, AQUANATE 110, AQUANATE 120, AQUANATE 130, AQUANATE 200, AQUANATE 210; products of Mitsui Chemicals & SKC Polyurethanes Inc., under trade names TAKENATE WD-220,

TAKENATE WD-240, TAKENATE WD-720, TAKENATE WD-725, TAKENATE WD-726, TAKENATE WD-730, TAKENATE WB-700, TAKENATE WB-720 and TAKENATE WB-920; products of Dai-ichi Kogyo Seiyaku Co., Ltd., under trade names ELASTRON BN-04, ELASTRON BN-11, ELASTRON BN-27, ELASTRON BN-69 and ELASTRON BN-77.

As the epoxy-based crosslinking agent, a species having two or more epoxy groups per molecule can be used without particular limitations. An epoxy-based crosslinking agent having 3 to 5 epoxy groups per molecule is preferable. For the epoxy-based crosslinking agent, solely one species or a combination of two or more species can be used. A water-soluble or water-dispersible epoxy-based crosslinking agent is preferable.

Specific examples of the epoxy-based crosslinking agent include N,N,N',N'-tetraglycidyl-m-xylenediamine, 1,3-bis(N,N-diglycidylaminomethyl)cyclohexane, 1,6-hexanediol diglycidyl ether, polyethylene glycol diglycidyl ether, and polyglycerol polyglycidyl ether.

Commercially available epoxy-based crosslinking agents include products of Mitsubishi Gas Chemical Co., Inc., under trade names TETRAD-X and TETRAD-C, a product of DIC Corporation under trade name EPICLON CR-5L, a product ofNagase ChemteX Corporation under trade name DENACOL EX-512, and a product of Nissan Chemical Industries, Ltd., under trade name TEPIC-G

The water-dispersed PSA composition may comprise other crosslinking agent(s) in addition to one, two or more species selected from a group consisting of oxazoline-based crosslinking agents, isocyanate-based crosslinking agents and epoxy-based crosslinking agents. Examples of the other crosslinking agent include carbodiimide-based crosslinking agents, hydrazine-based crosslinking agents, aziridine-based crosslinking agents and metal chelate-based crosslinking agents. Alternatively, the water-dispersed PSA composition may be free of the other crosslinking agent. In other words, as the crosslinking agent, the water-dispersed PSA composition may consist of one, two or more species selected from a group consisting of oxazoline-based crosslinking agents, isocyanate-based crosslinking agents and epoxy-based crosslinking agents. In a preferable embodiment, as for the crosslinking agent, the water-dispersed PSA composition may have either a composition consisting of an oxazoline-based crosslinking agent, a composition consisting of an isocyanate-based crosslinking agent or a composition consisting of an epoxy-based crosslinking agent.

The surface protection sheet disclosed herein preferably has a PSA layer obtained from a water-dispersed PSA composition that comprises at least an oxazoline-based crosslinking agent as the crosslinking agent. The water-dispersed PSA composition comprising the oxazoline-based crosslinking agent may be readily applied even to a low-polar surface. Such a PSA composition is less likely to cause repelling or peeling when applied and thus can form a PSA layer of more uniform quality. With water-dispersed PSA compositions comprising oxazoline-based crosslinking agents, there is a tendency that the adhesive performance of the surface protection sheet tends to be little affected by the length of the period from the preparation of the water-dispersed PSA composition comprising the crosslinking agent to the formation of the PSA layer. These are preferable from the standpoint of the productivity and stability of quality of the surface protection sheet. These effects can be obtained particularly well in the water-dispersed PSA composition that consists of one, two or more species of oxazoline-based crosslinking agent as the crosslinking agent.

The PSA composition may comprise a known tackifier such as a rosin-based tackifier, terpene-based tackifier and hydrocarbon-based tackifier. From the standpoint of obtaining greater weatherability, the amount of tackifier used is preferably 5 parts by weight or less to 100 parts by weight of the acrylic polymer or more preferably 1 part by weight or less. The art disclosed herein may be preferably practiced in an embodiment using no tackifier.

[Aqueous Solvent]

The water-dispersed PSA composition disclosed herein is defined as a PSA composition comprising an aqueous solvent as the solvent. The aqueous solvent in the water-dispersed PSA composition disclosed herein refers to water or a solvent mixture comprising water as the primary component (a component accounting for more than 50 % by weight). The other solvent(s) forming the solvent mixture besides water can be one, two or more species selected from various water-miscible organic solvents (lower alcohols, etc.). In the aqueous solvent in this description, the water content is typically 90 % by weight or higher, or preferably 95 % to 100 % by weight.

As far as the effects of the present invention are not significantly impaired, the PSA composition may further contain known additives that can be used in water-dispersed PSA compositions, such as viscosity-adjusting agent (thickener, etc.), release-adjusting agent, plasticizer, softener, leveling agent, dispersing agent, anti-foaming agent, surface lubricant, antistatic agent, preservative, antifungal agent, and weatherability enhancer (e.g. UV absorber, anti-aging agent, antioxidant, photostabilizer). These additives can be used solely as one species or in a combination of two or more species. The amount of each additive can be about the same as the amount usually added in the field of PSA compositions for surface protection sheets.

The total amount of additives is, to 100 parts by weight of the acrylic polymer, for instance, possibly 5 parts by weight or less, preferably 3 parts by weight or less, or more preferably 1 part by weight or less. From the standpoint of obtaining greater low-contaminating properties, the total amount of additives can be less than 0.5 part by weight or even less than 0.3 part by weight.

The surface protection sheet disclosed herein is preferably formed with the PSA layer being free of a weatherability enhancer. For instance, the weatherability enhancer content per 100 parts by weight of the acrylic polymer is preferably less than 0.3 part by weight or more preferably less than 0.1 part by weight. The PSA layer having such a composition can be formed typically by using a PSA composition having the corresponding composition. It is particularly preferable that the surface protection sheet is essentially free of a weathering enhancer. Here, the PSA layer being essentially free of a weatherability enhancer means at least that no weatherability enhancer is used intentionally.

The surface protection sheet may show, by the effect of inorganic powder comprised in the support substrate, practically sufficient weatherability even in an embodiment where the weatherability enhancer content in the PSA layer is limited to the aforementioned ranges or the PSA layer is essentially free of a weatherability enhancer. For instance, in the test method described later in Examples, it may show an excellent level of weatherability, such as with a fold increase of peel strength (peel strength ratio) of 2.5 or less in the accelerated weathering test and no leftover adhesive residue on the adherend surface in post-weathering peel strength measurement. The surface protection sheet can be obtained with even greater low-contaminating properties by lowering the weatherability enhancer content of the PSA layer or by making the PSA layer free of a weatherability enhancer.

Fig. 1 shows a cross-sectional structure of the surface protection sheet according to an embodiment of the present invention. Surface protection sheet 10 comprises a support substrate 1 and a PSA layer 2 provided on its first face (front face) 1A. When used, it is adhered over a surface 2A of PSA layer 2 to an adherend. PSA layer 2 may be formed with a PSA composition disclosed herein. Prior to use (i.e. before adhered to the adherend), surface protection sheet 10 is in a form where the surface 2A (adhesive face, i.e. the bonding surface to the adherend) of PSA layer 2 is protected with a release liner (not shown in the drawing) having a release face at least on the PSA layer-side surface. Surface protection sheet 10 may be in a form where, with the other surface (back face) 1B of support substrate 1 being a release face, surface protection sheet 10 is wound in a roll so that the other face comes in contact with the PSA layer 2 to protect the surface (adhesive face) 2A.

The PSA layer can be formed based on a method for forming PSA layers known in the PSA sheet field. For instance, a direct method can be preferably employed, where a PSA layer is formed by directly providing (typically applying) the PSA composition to the support substrate followed by drying. Alternatively, a transfer method can be employed where a PSA layer is pre-formed on a releasable surface (e.g. release face) by applying the PSA composition thereto and allowing the composition to dry. As the release face, a release liner surface or the back face of the support substrate treated with a release agent can be used. Although the PSA layer is typically formed in a continuous manner, it can be formed into, for example, a regular or random pattern of dots, stripes, and so on.

The PSA composition can be applied, for instance, using a known or commonly used coater such as a gravure roll coater, reverse roll coater, kiss roll coater, dip roll coater, bar coater, knife coater and spray coater. Alternatively, the PSA composition can be applied by impregnation, a curtain coating method, etc.

From the standpoint of accelerating the crosslinking reaction and increasing the productivity, the PSA composition is preferably dried with heat. The drying temperature can be, for instance, about 40 °C to 120 °C, or usually preferably about 60 °C to 100 °C. After dried, the PSA composition may be aged for purposes such as adjusting the migration of components in the PSA layer and allowing the crosslinking reaction to progress, and relieving deformation possibly present in the support substrate and PSA layer, etc.

The non-volatile content (NV) of the PSA composition is, but not particularly limited to, suitably about 25 to 75 % by weight or usually preferably about 30 to 70 % by weight. The amount of water used in the emulsion polymerization can be selected so as to obtain a PSA composition at such an NV. Alternatively, the NV of the PSA composition can be adjusted after the completion of the emulsion polymerization, by adding water, etc.

The thickness of the PSA layer is not particularly limited and can be, for instance, 100 μm or less (typically 2 μm to 100 μm). From the standpoint of minimizing peel strength increase and of the anti-residue properties, etc., usually, the thickness of the PSA layer is suitably 30 μm or less, preferably 20 μm or less, or more preferably 15 μm or less. From the standpoint of the tight adhesion to the adherend surface, the thickness of the PSA layer is usually suitably 3 μm or greater, preferably 5 μm or greater, or more preferably 7 μm or greater.

The thickness (typically the combined thickness of the PSA layer and support substrate) of the surface protection sheet disclosed herein is not particularly limited and can be, for instance, 400 μm or less. From the standpoint of the conformability to the adherend surface contour, etc., the thickness of the surface protection sheet is usually suitably 100 μm or less, preferably 70 μm or less, more preferably 55 μm or less, or yet more preferably less than 50 μm. The thickness of the surface protection sheet can be, for instance, 15 μm or greater. From the standpoint of the strength and handling properties, it is suitably 25 μm or greater, preferably 30 μm or greater, or more preferably 35 μm or greater.

The PSA layer of the surface protection sheet disclosed herein has an ethyl acetate-insoluble portion (gel fraction) of, but not particularly limited to, 60 % by weight or greater. This allows for adjustment of the peel strength of the surface protection sheet to a suitable range. From the standpoint of the anti-residue properties, the gel fraction of the PSA layer is preferably 70 % by weight or greater, more preferably 80 % by weight or greater, or yet more preferably 85 % by weight or greater. The gel fraction of the PSA layer can be adjusted, for instance, by the copolymer composition

of the acrylic polymer, by selecting the type of crosslinking agent and its amount used as well as the type of surfactant and its amount used, by whether a chain transfer agent is used or not and its amount used if any, and so on. The maximum gel fraction is theoretically 100 % by weight.

Here, the gel fraction of the PSA layer can be determined by wrapping a measurement sample weighing W1 with a porous tetrafluoroethylene resin sheet and suspending the resultant in ethyl acetate at room temperature for one week, subsequently drying the measurement sample, measuring the weight W2 of its ethyl acetate-insoluble portion, and substituting W1 and W2 into the following equation:

$$\text{gel fraction (\%)} = W2/W1 \times 100.$$

More specifically, the gel fraction can be measured by the following method: In particular, a measurement sample weighing approximately 0.1 g is wrapped into a pouch with a porous tetrafluoroethylene resin sheet of 0.2 $\mu$m average pore diameter, and the opening is tied with twine. The weight of the wrapping (the combined weight of the porous tetrafluoroethylene resin sheet and the twine) Wa (mg) is measured in advance. The weight of the pouch (the combined weight of the PSA and the wrapping) Wb (mg) is measured. The pouch is placed in a screw vial of volume 50 mL (one screw vial used for each pouch), and the screw vial is filled with ethyl acetate. This is set still at room temperature (typically at 23 °C) for seven days, and the pouch is then removed and allowed to dry at 120 °C for two hours. The weight Wc (mg) of the pouch after dried is measured. The gel fraction of the PSA can be determined by substituting the Wa, Wb and Wc into the following:

$$\text{Gel fraction (\%)} = (Wc - Wa)/(Wb - Wa) \times 100$$

As the porous tetrafluoroethylene resin sheet, trade name NITOFLON® NTF1122 available from Nitto Denko Corporation or an equivalent product can be used.

The PSA layer of the surface protection sheet disclosed herein has a weight average molecular weight (Mw) of its ethyl acetate-soluble portion (sol fraction) of, but not particularly limited to, preferably $3 \times 10^5$ to $3 \times 10^6$ or more preferably $5 \times 10^5$ to $2.5 \times 10^6$. When the Mw of the sol fraction is far smaller than $3 \times 10^5$, the PSA layer may have insufficient cohesiveness, likely causing leftover adhesive residue and peel strength increase. On the other hand, when the Mw of the sol fraction is far larger than $3 \times 10^6$, the adhesion to the adherend surface tends to degrade.

Here, the Mw of the sol fraction refers to the weight average molecular weight based on standard polystyrene determined by gel permeation gas chromatography (GC) analysis of a measurement sample (typically the sol fraction). In particular, the Mw of the sol fraction is measured by the following method.

[Measurement Method for Weight Average Molecular Weight (Mw)]

PSA is suspended in ethyl acetate at room temperature for 7 days to dissolve its soluble portion. The extract of the soluble portion is allowed to dry to obtain a measurement sample. The measurement sample may also be obtained, for instance, by allowing the polymer dissolved in ethyl acetate during the gel fraction measurement to dry at room temperature. The measurement sample is dissolved again in tetrahydrofuran (THF) to prepare a 0.1 wt. % sample solution in THF. The THF solution is filtered through a membrane filter of 0.45 $\mu$m average pore diameter to obtain a filtrate (sample solution for molecular weight measurement). With respect to the filtrate, the Mw based on standard polystyrene is determined by a GPC system. As the GPC system, model name HLC-8320 GPC available from Tosoh Corporation can be used. The measurement conditions can be as follows:

[GPC Measurement Conditions]

Columns: TSK gel GMH-H(S) $\times$ 2
Column size: 7.8 mm I.D. $\times$ 300 mm
Detector: differential refractometer
Eluent: THF
Flow rate: 0.6 mL/min
Measurement temperature: 40 °C
Sample injection volume: 100 $\mu$L

Although not particularly limited to this, the surface protection sheet disclosed herein has an initial peel strength (P1) of 4 N/10mm or less when measured as described later in Examples. From the standpoint of the ease of application to the adherend (e.g. the ease of redoing the application, the ease of bubble elimination, etc.), the initial peel strength

is more preferably 3.2 N/10mm or less, or yet more preferably 2.8 N/10mm or less. From the standpoint of the conformability to the adherend surface contour, the initial peel strength is preferably 0.2 N/10mm or greater. For instance, it is particularly meaningful to have such initial peel strength in a surface protection sheet used for protecting an adherend having a paint film on the surface.

In a preferable embodiment of the surface protection sheet disclosed herein, the peel strength ratio (P2/P1) is, but not particularly limited to, 3 or lower when measured as outlined later in Examples. In a more preferable embodiment, the ratio is 2.5 or lower. The surface protection sheet with which peel strength increase is minimized may be suited for an application where the adherend on which the surface protection sheet is adhered is stored outside for a long period, etc.

Although not particularly limited to this, the PSA composition disclosed herein can make a surface protection sheet having a low-temperature low-speed peel strength ($P_{L0}$) of 0.7 N/25 mm or greater (more preferably 1 N/25mm or greater, e.g. 1.3 N/25mm or greater) when measured as described later in Examples. The surface protection sheet showing such a peel strength ($P_{L0}$) may tightly adhere to the adherend surface to provide excellent protection even in an application where it is applied to the adherend in a low-temperature environment such as the outdoors during winter. From the standpoint of the ease of application to the adherend (e.g. the ease of redoing the application, the ease of bubble elimination, etc.), the peel strength ($P_{L0}$) is usually suitably 10 N/25mm or less, preferably 7.5 N/25mm or less, or more preferably 6 N/25mm or less.

Although not particularly limited to this, the PSA composition disclosed herein can be preferably used in fabricating a surface protection sheet that has a room temperature low-speed peel strength ($P_{L23}$) of 10 N/25mm or less when measured as described later in Examples. From the standpoint of the ease of application to the adherend, the peel strength ($P_{L23}$) is more preferably 7.5 N/25mm or less, or yet more preferably 6 N/25mm or less. From the standpoint of the conformability to the adherend surface contour, the peel strength ($P_{L23}$) is preferably 1 N/25mm or greater, or more preferably 2 N/25mm or greater.

Although not particularly limited to the following, the surface protection sheet fabricated by using the PSA composition disclosed herein has a peel strength ratio ($P_{L23}/P_{L0}$) of preferably 7 or less, or more preferably 5 or less, determined from the room temperature low-speed peel strength ($P_{L23}$) and low-temperature low-speed peel strength ($P_{L0}$). The surface protection sheet with such a peel strength ratio ($P_{L23}/P_{L0}$) is easy to use because it can be favorably applied over a wide temperature range.

Several working examples relating to the present invention are described below. In the description below, "parts" and "%" are by weight unless otherwise specified. The amounts of the respective materials used are based on active ingredients unless otherwise noted.

Experiment 1

<Fabrication of Support Substrate>

(Support Substrate (b1))

A polyolefin resin material was melted and mixed in a film-molding machine and extruded from the T-die of the molding machine to form a 35 μm thick polyolefin resin film. The polyolefin resin material contained 70 parts homopolypropylene (product name NOVATEC PP FY4 available from Japan Polypropylene Corporation), 20 parts LLDPE (product name KERNEL KF3 80 available from Japan Polyethylene Corporation), and 10 parts rutile titanium dioxide (product name TIPAQUE CR-95 available from Ishihara Sangyo Kaisha, Ltd.). The film was subjected on one side to corona discharge treatment to fabricate a support substrate (b1).

(Support Substrate (b2))

No rutile titanium dioxide was used. Otherwise, in the same manner as the fabrication of the support substrate (b1), a support substrate (b2) was fabricated.

<Preparation of Acrylic Polymer>

A monomer mixture was mixed with 2 parts surfactant and 150 parts water, with the monomer mixture being formed of 56 parts 2-ethylhexyl acrylate (2EHA), 42 parts n-butyl methacrylate (BMA) and 2 parts acrylic acid (AA). The resulting mixture was emulsified with an emulsifying machine (homo mixer) under nitrogen gas flow to prepare a starting monomer emulsion. As the surfactant, was used polyoxyethylene-1-(allyloxymethyl) alkyl ether ammonium sulfate (product name AQUALON KH-1025 available from Dai-ichi Kogyo Seiyaku Co., Ltd.).

To a reaction vessel equipped with a thermometer, nitrogen inlet, condenser and stirrer, the emulsion was placed and heated with stirring to a liquid temperature of 50 °C under nitrogen gas flow. To this, was added as a

polymerization initiator 0.03 part 2,2'-azobis(2-methylpropionamidine) dihydrochloride (product name V-50 available from Wako Pure Chemical Industries, Ltd.). The reaction mixture was allowed to undergo polymerization for 5 hours while keeping the liquid temperature around 50 °C. To the resulting polymerization reaction mixture, ammonia water was added to adjust the pH to approximately 8. A water dispersion (c0) of an acrylic polymer (a1) was thus prepared. The acrylic polymer (a1) had an average particle diameter of 0.14 μm, measured with a particle size analyzer (model name LS 13 320 available from Beckman Coulter, Inc.; wet method). The Tg of the acrylic polymer (a1) is -37 °C, determined from the monomer composition.

<Preparation of PSA Compositions>

(PSA Composition (c1))

To 100 parts non-volatiles in the water dispersion (c0), was mixed as an oxazoline-based crosslinking agent 2 parts EPOCROS WS-500 (available from Nippon Shokubai Co., Ltd., oxazoline group-containing aqueous crosslinking agent, oxazoline equivalent: 220 g·solid/eq) to prepare a PSA composition (c1). In the PSA composition (c1), the number of oxazoline equivalents in the aqueous crosslinking agent was 0.33 relative to 1 carboxy equivalent in the acrylic polymer (a1).

(PSA Composition (c2))

In place of the 2 parts oxazoline-based crosslinking agent in the preparation of the PSA composition (c1), was used 4 parts isocyanate-based crosslinking agent available from DIC Corporation, trade name BURNOCK DNW5500 (isocyanate group-containing aqueous crosslinking agent). Otherwise, in the same manner as the preparation of the PSA composition (c 1), a PSA composition (c2) was prepared.

(PSA Composition (c3))

In place of the 2 parts oxazoline-based crosslinking agent in the preparation of the PSA composition (c1), was used 4 parts isocyanate-based crosslinking agent available from DIC Corporation, trade name BURNOCK DNW6000 (isocyanate group-containing aqueous crosslinking agent). Otherwise, in the same manner as the preparation of the PSA composition (c1), a PSA composition (c3) was prepared.

(PSA Composition (c4))

In place of the 2 parts oxazoline-based crosslinking agent in the preparation of the PSA composition (c1), was used 4 parts epoxy-based crosslinking agent available from DIC Corporation, trade name EPICLON CR-5L (epoxy group-containing aqueous crosslinking agent). Otherwise, in the same manner as the preparation of the PSA composition (c 1), a PSA composition (c4) was prepared.

(PSA Composition (c5))

In place of the 2 parts oxazoline-based crosslinking agent in the preparation of the PSA composition (c1), was used 6 parts carbodiimide-based crosslinking agent available from Nisshinbo Chemical Inc., trade name CARBODILITE V-02 (carbodiimide group-containing aqueous crosslinking agent). Otherwise, in the same manner as the preparation of the PSA composition (c1), a PSA composition (c5) was prepared.

(PSA Composition (c6))

In place of the 2 parts oxazoline-based crosslinking agent in the preparation of the PSA composition (c1), was used 3 parts carbodiimide-based crosslinking agent available from Nisshinbo Chemical Inc., trade name CARBODILITE E-02 (carbodiimide group-containing aqueous crosslinking agent). Otherwise, in the same manner as the preparation of the PSA composition (c1), a PSA composition (c6) was prepared.

(PSA Composition (c7))

In the preparation of the PSA composition (c1), to 100 parts non-volatiles in the water dispersion (c0), 0.5 part of a UV absorber was further mixed. As the UV absorber, trade name TINUVIN 5151 available from BASF Corporation was used. Otherwise, in the same manner as the preparation of the PSA composition (c1), a PSA composition (c7) was

prepared.

In the preparation of PSA Compositions (c1) to (c7), the crosslinking agents were used in amounts so as to obtain initial peel strength (P1) in a range of 0.5 N/10mm to 1.0 N/10mm when measured by the method described later.

<Fabrication of Surface Protection Sheets>

(Example 1A)

To one face (the corona discharge treated face) of the support substrate (b1), the PSA composition (c1) was applied to a thickness of 10 μm after dried. This was dried at 80 °C for 5 minutes and aged at 50 °C for two days to fabricate a surface protection sheet according to Example 1A. The sol fraction of the PSA layer in this surface protection sheet had a Mw of $1.9 \times 10^6$.

(Examples 2A to 4A)

The PSA compositions (c2) to (c4) were used in place of the PSA composition (c1), respectively. Otherwise, in the same manner as Example 1A, surface protection sheets according to Examples 2Ato 4Awere fabricated.

(Example 5A)

In this example, the water dispersion of the acrylic polymer (a1) was used as it was as the PSA composition (c0). In other words, the PSA composition (c0) was free of a crosslinking agent. The PSA composition (c0) was used in place of the PSA composition (c1). Otherwise, in the same manner as Example 1A, a surface protection sheet according to Example 5A was fabricated.

(Examples 6A, 7A)

In place of the PSA composition (c1), the PSA compositions (c5) and (c6) were used, respectively. Otherwise, in the same manner as Example 1A, surface protection sheets according to Examples 6A and 7A were fabricated.

(Example 8A)

In place of the support substrate (b1), a support substrate (b2) was used. Otherwise, in the same manner as Example 1A, a surface protection sheet according to Example 8A was fabricated.

(Example 9A)

In place of the support substrate (b1) and the PSA composition (c1), the support substrate (b2) and the PSA composition (c7) were used, respectively. Otherwise, in the same manner as Example 1A, a surface protection sheet according to Example 9A was fabricated.

In Examples 1A to 9A, the surface protection sheets were fabricated, using the PSA compositions (c0) to (c7) within 3 hours from their preparation.

The surface protection sheets obtained in Examples 1A to 9A and the PSA compositions used in fabricating these surface protection sheets were subjected to the following measurements and tests. The results are shown in Table 2 with a summary of the surface protection sheets according to the respective examples.

<Initial Peel Strength (P1)>

The surface protection sheet according to each example was cut to a strip of 10 mm wide by 80 mm long size to prepare a test piece. As the adherend, was used a painted plate (available from Nippon Testpanel Co., Ltd.) having a urethane-based clear coat layer on the surface. The urethane-based clear coat layer had been formed by painting a steel plate with a two-liquid-type urethane-based clear coat (product name RETAN PG ECO HS CLEAR available from Kansai Paint Co., Ltd.) with an acrylic polyol resin and a polyisocyanate resin to be mixed for use.

The adhesive face of the test piece was press-bonded to the adherend surface (the clear coat layer surface) with a 2 kg rubber roller (specified in JIS Z0237) moved back and forth once. The sample was left standing in a standard environment at 23 °C, 50 % RH. Subsequently, in the standard environment, using a universal tensile tester, at a tensile speed of 30 m/min and at a peel angle of 180°, initial peel strength (P1) (N/10mm) was measured.

<Post-Weathering Peel Strength (P2)>

In the same manner as the initial peel strength measurement, the adhesive face of each test piece was press-bonded to the adherend surface. The sample was placed and processed in a sunshine weather meter (model name S80 available from Suga Test Instruments, Co., Ltd.). The conditions of the process are as follows:

[Accelerated Weathering Test Conditions]

Black panel temperature: 63 °C
Rain: repeating a cycle of 18 minute water spray during 120 minutes of irradiation
Time of process: 500 hours

The processed sample was removed from the weather meter and stored in the standard environment at 23 °C, 50 % RH for 6 hours. Subsequently, in the standard environment, using a universal tensile tester, at a tensile speed of 30 m/min and at a peel angle of 180°, post-weathering peel strength (P2) (N/10mm) was measured. In Table 2, the symbol "×" for post-weathering peel strength (P2) indicates that part of the PSA was left as residue (leftover adhesive residue) on the adherend surface after removed.

<Peel Strength Ratio (P2/P1)>

From the initial peel strength (P1) and post-weathering peel strength (P2) measured above, the peel strength ratio (P2/P1) was determined. A ratio value near 1 implies a minute change in peel strength before and after the weathering test. When adhesive residue was left over the adherend surface in the measurement of post-weathering peel strength (P2), the peel strength ratio (P2/P1) was not determined.

<Low-Contamination Properties>

In the measurement of post-weathering peel strength (P2), after the surface protection sheet was removed, the adherend surface was visually inspected and the result was evaluated according to the following two grades:

G: No contamination observed (good low-contaminating properties)
P: Contamination observed (poor low-contaminating properties)

<Ease of Application>

The corona discharge treatment-free faces of the support substrates were used to evaluate the ease of application of the PSA compositions (c0) to (c7) as outlined below. In particular, using a Baker applicator, the PSA composition used in each example was applied to the corona discharge treatment-free face of the support substrate used in the same example to 20 cm width by 30 cm length by 10 μm thickness after dried. This was dried at 80 °C for 5 minutes to form a PSA layer. The application was performed within 3 hours from the preparation of the PSA compositions (c0) to (c7).

The resulting PSA layer was visually inspected and the ease of application (coverage) was evaluation according to the following three grades:

E: No repelling observed around the outer edges or in the inner area of the PSA layer (excellent ease of application)
G: Repelling observed only around the outer edges of the PSA layer or at five or fewer locations in the inner area of the PSA layer (good ease of application)
P: Repelling observed at more than five locations in the inner area of the PSA layer (poor ease of application)

<Stability of Properties>

The PSA compositions (c0) to (c7) prepared above were stored in an environment at 23 °C, 50 % RH for one week. Using the stored PSA compositions (c0) to (c7), but otherwise, in the same manner as Examples 1A to 9A surface protection sheets were fabricated, respectively, and measured for initial peel strength (P3) (N/10mm) in the same manner as the initial peel strength (P1) measurement.

From the measured values of the initial peel strength (P3) and the initial peel strength (P1) obtained above, the rate (%) of peel strength change was determined by the following formula. A low rate of peel strength change means high stability of properties of the surface protection sheet with respect to storage of the PSA composition after preparation.

$$\text{Rate of peel strength change (\%)} = |(P3 - P1)/P1| \times 100$$

From the resulting value of the rate of peel strength change (%), the stability of properties of the surface protection sheets with respect to storage of the PSA compositions were evaluated according to the following three grades:

E: Rate of peel strength change ≤ 20 % (excellent stability of properties)
G: Rate of peel strength change ≤ 100 % (good stability of properties)
P: Rate of peel strength change > 100 % (poor stability of properties)

[Table 2]

Table 2

| | | | | Ex. 1A | Ex. 2A | Ex. 3A | Ex. 4A | Ex. 5A | Ex. 6A | Ex 7A | Ex. 8A | Ex. 9A |
|---|---|---|---|---|---|---|---|---|---|---|---|---|
| Support substrate | Type | | | b1 | b1 | b1 | b1 | b1 | b1 | b1 | b2 | b2 |
| | Composition (parts) | Polyolefin | PP | 70 | 70 | 70 | 70 | 70 | 70 | 70 | 70 | 70 |
| | | | LLDPE | 20 | 20 | 20 | 20 | 20 | 20 | 20 | 20 | 20 |
| | | Inorganic powder | TiO2 | 10 | 10 | 10 | 10 | 10 | 10 | 10 | - | - |
| Water Dispersion | Monomer composition (parts) | Monomer A | 2EHA | 56 | 56 | 56 | 56 | 56 | 56 | 56 | 56 | 56 |
| | | | BMA | 42 | 42 | 42 | 42 | 42 | 42 | 42 | 42 | 42 |
| | | Monomer B | AA | 2 | 2 | 2 | 2 | 2 | 2 | 2 | 2 | 2 |
| | Surfactant (parts) | | | 2 | 2 | 2 | 2 | 2 | 2 | 2 | 2 | 2 |
| | Polymerization initiator (parts) | | | 0.03 | 0.03 | 0.03 | 0.03 | 0.03 | 0.03 | 0.03 | 0.03 | 0.03 |
| PSA Composition | Type | | | c1 | c2 | c3 | c4 | c0 | c5 | c6 | c1 | c7 |
| | Composition | Water dispersion (parts) | | 100 | 100 | 100 | 100 | 100 | 100 | 100 | 100 | 100 |
| | | Crosslinking agent | Type | o-1 | i-1 | i-2 | e-1 | - | c-1 | c-2 | o-1 | o-1 |
| | | | Amount (parts) | 2 | 4 | 4 | 4 | - | 6 | 3 | 2 | 2 |
| | | UV absorber | | - | - | - | - | - | - | - | - | 0.5 |
| PSA layer | Gel fraction | (%) | | 86 | 94 | 91 | 86 | 80 | 100 | 97 | 86 | 86 |

(continued)

| | | | Ex. 1A | Ex. 2A | Ex. 3A | Ex. 4A | Ex. 5A | Ex. 6A | Ex 7A | Ex. 8A | Ex. 9A |
|---|---|---|---|---|---|---|---|---|---|---|---|
| Evaluations | Peel strength (N/10mm) | Initial (P1) | 0.6 | 0.7 | 0.9 | 0.7 | 4.9 | 1.0 | 0.9 | 0.7 | 0.6 |
| | | Weathered (P2) | 1.4 | 1.6 | 2.0 | 1.6 | × | × | 4.2 | × | 1.5 |
| | Peel strength ratio (P2/P1) | | 2.3 | 2.3 | 2.2 | 2.3 | - | - | 4.7 | - | 2.5 |
| | Low-contaminating properties | | G | G | G | G | G | G | G | G | P |
| | Ease of application | | E | G | G | G | G | E | E | E | E |
| | Stability of properties | | E | G | G | G | E | E | E | E | E |

Crosslinking agents
o-1: Oxazoline-based crosslinking agent, trade name EPOCROS WS-500
i-1: Isocyanate-based crosslinking agent, trade name BARNOC DNW5500
i-2: Isocyanate-based crosslinking agent, trade name BARNOC DNW6000
e-1: Epoxy-based crosslinking agent, trade name EPICLON CR-5L
c-1: Carbodiimide-based crosslinking agent, trade name CARBODILITE V-02
c-2: Carbodiimide-based crosslinking agent, trade name CARBODILITE E-02

As shown in Table 2, with respect to the surface protection sheets of Examples 1A to 4A using crosslinking agents selected from a group consisting of oxazoline-based crosslinking agents, isocyanate-based crosslinking agents and epoxy-based crosslinking agents, all had a peel strength ration (P2/P1) of 3 or lower, or more specifically 2.5 or lower, with greatly minimized peel strength increase. The surface protection sheets of these Examples 1A to 4A were also confirmed excellent in anti-residue properties and low-contaminating properties. The surface protection sheets of Examples 1A to 4A also provided excellent ease of removal, all with post-weathering peel strength (P2) of 4 N/10mm or less, or more specifically 2.5 N/10mm or less. Example 1A using an oxazoline-based crosslinking agent showed greater ease of application as compared to Examples 2A to 4A. It also showed higher stability of properties than Examples 2A to 4A.

On the other hand, Example 5A using no crosslinking agent had a rather high initial peel strength (P1), resulting in the occurrence of leftover adhesive residue in the measurement of post-weathering peel strength (P2). With respect to Examples 6A and 7A using carbodiimide-based crosslinking agents, the increases in peel strength increase were clearly greater than those of Examples 1A to 4A, resulting in a peel strength ratio (P2/P1) of 4 or higher or the occurrence of leftover adhesive residue on the adherend surface. Leftover adhesive residue occurred on the adherend surface in example 8A using the same PSA composition (cl) as Example 1A together with the support substrate (b2) free of inorganic powder. In Example 9A where the weatherability was increased with the inclusion of a UV absorber in the PSA composition while using the same support substrate (b2) as Example 8A, the peel strength ratio (P2/P1) was lowered to 2.5, but as a result, the adherend surface was contaminated.

Experiment 2

<Preparation of PSA Compositions>

(Example 1B)

A monomer mixture was mixed with 2 parts surfactant and 150 parts water, with the monomer mixture being formed of 60 parts 2-ethylhexyl acrylate (2EHA), 38 parts n-butyl methacrylate (BMA) and 2 parts acrylic acid (AA). The resulting mixture was emulsified with an emulsifying machine (homo mixer) under nitrogen gas flow to prepare a starting monomer emulsion. As the surfactant, was used $\alpha$-sulfo-$\omega$-(1-(alkoxy)methyl-2-(2-propenyloxy)ethoxy)-poly(oxy-1,2-ethanediyl) ammonium salt (product name ADEKARIA SOAP SR-1025 available from ADEKA corporation).

To a reaction vessel equipped with a thermometer, nitrogen inlet, condenser and stirrer, the emulsion was placed and heated with stirring to a liquid temperature of 50 °C under nitrogen gas flow. To this, was added as a polymerization initiator 0.03 part 2,2'-azobis(2-methylpropionamidine) dihydrochloride (product name V-50 available from Wako Pure Chemical Industries, Ltd.). The reaction mixture was allowed to undergo polymerization for 5 hours while keeping the liquid temperature around 50 °C. To the resulting polymerization reaction mixture, ammonia water was added to adjust the pH to approximately 8. A water dispersion of an acrylic polymer was thus prepared. The acrylic polymer had an average particle diameter of 0.14 $\mu$m, measured with a particle size analyzer (model name LS 13 320 available from Beckman Coulter, Inc.; wet method). The Tg of the acrylic polymer is -41 °C, determined from the monomer composition.

To 100 parts non-volatiles in the water dispersion, was mixed as an oxazoline-based crosslinking agent 2 parts EPOCROS WS-500 (available from Nippon Shokubai Co., Ltd., oxazoline group-containing aqueous crosslinking agent, oxazoline equivalent: 220 g· solid/eq) to prepare a PSA composition according to this example. In the PSA composition, the number of oxazoline equivalents in the aqueous crosslinking agent was 0.33 relative to 1 carboxy equivalent in the acrylic polymer.

(Example 2B)

For the monomers, were used 58 parts 2EHA, 40 parts BMA and 2 parts AA. As the surfactant, was used 2 parts polyoxyethylene nonyl propenyl phenyl ether ammonium sulfate (product name AQUALON BC-2020 available from Dai-ichi Kogyo Seiyaku Co., Ltd.). Otherwise, in the same manner as Example 1B, a PSA composition according to this example was prepared. The acrylic polymer had an average particle diameter of 0.15 $\mu$m, measured in the same manner as in Example 1B.

(Example 3B)

For the monomers, were used 55 parts 2EHA, 43 parts BMA and 2 parts AA. As the surfactant, was used 2 parts polyoxyethylene-1-(allyloxymethyl) alkyl ether ammonium sulfate (product name AQUALON KH-1025 available from Dai-ichi Kogyo Seiyaku Co., Ltd.). Otherwise, in the same manner as Example 1B, a PSA composition according

to this example was prepared. The acrylic polymer had an average particle diameter of 0.14 μm, measured in the same manner as in Example 1B.

(Example 4B)

As the surfactant, was used 2 parts sodium alkyl allyl sulfosuccinate (product name ELEMINOL JS-20 available from Sanyo Chemical Industries, Ltd.). Otherwise, in the same manner as Example 3B, a PSA composition according to this example was prepared. The acrylic polymer had an average particle diameter of 0.11 μm, measured in the same manner as in Example 1B.

(Comparative Example 5B)

For the monomers, were used 60 parts n-butyl acrylate (BA), 38 parts BMA and 2 parts AA. Otherwise, in the same manner as Example 2B, a PSA composition according to this example was prepared. The acrylic polymer had an average particle diameter of 0.12 μm, measured in the same manner as in Example 1B.

(Comparative Example 6B)

For the monomers, were used 55 parts BA, 43 parts BMA and 2 parts AA. Otherwise, in the same manner as Example 3B, a PSA composition according to this example was prepared. The acrylic polymer had an average particle diameter of 0.11 μm, measured in the same manner as in Example 1B.

(Comparative Example 7B)

As the surfactant, was used 2 parts polyoxyalkylene alkenyl ether ammonium sulfate (product name LATEMULE PD-104 available from Kao Corporation, having an isopropenyl group at the alkenyl terminus). Otherwise, in the same manner as Example 1B, emulsion polymerization was carried out. However, formation of aggregates was visually observed during the polymerization reaction, the experiment was stopped.

(Comparative Example 8B)

As the surfactant, was used 2 parts methacryloyloxy polyoxypropylene sodium sulfate (product name ELEMINOL RS-3000 available from Sanyo Chemical Industries, Ltd.). Otherwise, in the same manner as Example 2B, emulsion polymerization was carried out. However, formation of aggregates was visually observed during the polymerization reaction, the experiment was stopped.

(Comparative Example 9B)

As the surfactant, was used 2 parts bis(polyoxyethylene polycyclic phenyl ether) methacrylate sulfate (product name ANTOX MS-60 available from Nippon Nyukazai Co., Ltd.). Otherwise, in the same manner as Example 3B, emulsion polymerization was carried out. However, formation of aggregates was visually observed during the polymerization reaction, the experiment was stopped.

Table 3 summarizes Examples 1B to 4B and Comparative Examples 5B to 9B. For the stability of polymerization in the table, in the emulsion polymerization to obtain the acrylic polymer, when aggregates were visually observed in the polymerization reaction mixture (before neutralized), the stability of polymerization was evaluated as "P" (poor); and when no aggregates were observed, the stability of polymerization was evaluated as "G" (good).

<Fabrication of PSA Sheets>

A polyolefin resin material was melted and mixed in a film-molding machine and extruded from the T-die of the molding machine to form a 35 μm thick polyolefin resin film. The polyolefin resin material contained 70 parts homo polypropylene (product name NOVATEC PP FY4 available from Japan Polypropylene Corporation), 20 parts LLDPE (product name KERNEL KF3 80 available from Japan Polyethylene Corporation), and 10 parts rutile titanium dioxide (product name TIPAQUE CR-95 available from Ishihara Sangyo Kaisha, Ltd.). The film was subjected on one side to corona discharge treatment to fabricate a support substrate.

To one face (the corona discharge treated face) of the support substrate, the respective PSA compositions obtained in Examples 1B to 4B and Comparative Examples 5B and 6B were applied to thicknesses of 10 μm after dried. This was dried at 80 °C for 5 minutes and aged at 50 °C for two days to fabricate PSA sheets according to Examples

1B to 6B. The sol fraction of the PSA layer in the PSA sheet according to Example 1B had a Mw of $1.9 \times 10^6$. These PSA sheets were subjected to the following measurements and tests. The results are shown in Table 3.

<Low-Speed Peel Strength>

The PSA sheet according to each of Examples 1B to 4B and Comparative Examples 5B and 6B was cut to a strip of 25 mm wide by 90 mm long size to prepare a test piece. As the adherend, was used a painted plate (available from Nippon Testpanel Co., Ltd.) having a urethane-based clear coat layer on the surface. The urethane-based clear coat layer had been formed by painting a steel plate with a two-liquid-type urethane-based clear coat (product name RETAN PG ECO HS CLEAR available from Kansai Paint Co., Ltd.) with an acrylic polyol resin and a polyisocyanate resin to be mixed for use.

(Room Temperature (23 °C) Peel Strength)

In an environment at 23 °C, the adhesive face of the test piece was press-bonded to the adherend surface (the clear coat layer surface) with a 2 kg rubber roller (specified in JIS Z0237) moved back and forth once. The sample was left standing in a standard environment at 23 °C, 50 % RH. Subsequently, in the standard environment, using a universal tensile tester, at a tensile speed of 0.3 m/min and at a peel angle of 180°, low-speed peel strength at 23 °C (room temperature low-speed peel strength $P_{L23}$) (N/25mm) was measured.

(Low Temperature (0 °C) Peel Strength)

In an environment at 0 °C, the adhesive face of the test piece was press-bonded to the adherend surface with a 2 kg rubber roller (specified in JIS Z0237) moved back and forth once. The sample was left standing in an environment at 0 °C. Subsequently, in the environment at 0 °C, using a universal tensile tester, at a tensile speed of 0.3 m/min and at a peel angle of 180°, low-speed peel strength at a low temperature (low temperature low-speed peel strength $P_{L0}$) (N/25mm) was measured.

From the measurement results obtained above, the peel strength ratios ($P_{L23}/P_{L0}$) were determined. It can be said that the larger the peel strength ratio ($P_{L23}/P_{L0}$) is, the smaller the temperature dependence of peel strength is.

<High-Speed Peel Strength>

High-speed peel strength was measured as outlined below, using the same test pieces and adherend as the low-speed peel strength measurement.

In particular, in an environment at 23 °C, the adhesive face of the test piece was press-bonded to the adherend surface (the clear coat layer surface) with a 2 kg rubber roller (specified in JIS Z0237) moved back and forth once. The sample was left standing in a standard environment at 23 °C, 50 % RH. Subsequently, in the standard environment, using a universal tensile tester, at a tensile speed of 30 m/min and at a peel angle of 180°, high-speed peel strength at 23 °C (room temperature high-speed peel strength ($P_{H23}$)) (N/25mm) was measured.

<Anti-Marking Properties>

Each of the PSA sheets according to Examples 1B to 4B and Comparative Examples 5B and 6B was cut to a 50 mm wide by 70 mm long rectangular shape to obtain a test piece. At 23 °C, the adhesive face of the test piece was applied to the adherend surface by hand. When applying the test piece, wrinkles and air blisters were intentionally formed in the PSA sheet so as to make the PSA sheet more likely to leave its marks on the adhered surface. The sample was stored in an environment at 70 °C for one week. Subsequently, at 23 °C, the test piece was eliminated (removed) from the adherend. The area of the adherend to which the test piece had been adhered was visually inspected for the presence of adhesive marks and the level of marking was evaluated (observation before heated). The adherend was further stored in an environment at 80 °C for one hour. Subsequently, the area to which the test piece had been adhered was visually inspected again (observation after heated). From the results of these observations, the anti-marking properties were evaluated according to the following three grades:

G (good anti-marking properties): No adhesive marks observed before heated
A (acceptable anti-marking properties): A few adhesive marks observed before heated, but to a level with no problem for practical use.
P (poor anti-marking properties): Adhesive marks observed before heated and remained after heated

[Table 3]

| | | | | Table 3 | | | | Comp. Ex. 5B | Comp. Ex. 6B | Comp. Ex. 7B | Comp. Ex. 8B | Comp. Ex. 9B . |
|---|---|---|---|---|---|---|---|---|---|---|---|---|
| | | | | Ex. 1B | Ex. 2B | Ex. 3B | Ex 4B | | | | | |
| Support substrate | Composition (parts) | Polyolefin | PP | 70 | 70 | 70 | 70 | 70 | 70 | 70 | 70 | 70 |
| | | | LLDPE | 20 | 20 | 20 | 20 | 20 | 20 | 20 | 20 | 20 |
| | | Inorganic powder | $TiO_2$ | 10 | 10 | 10 | 10 | 10 | 10 | 10 | 10 | 10 |
| Water dispersion | Monomer composition (parts) | 2EHA | | 60 | 58 | 55 | 55 | 0 | 0 | 60 | 58 | 55 |
| | | BA | | 0 | 0 | 0 | 0 | 60 | 55 | 0 | 0 | 0 |
| | | BMA | | 38 | 40 | 43 | 43 | 38 | 43 | 38 | 40 | 43 |
| | | AA | | 2 | 2 | 2 | 2 | 2 | 2 | 2 | 2 | 2 |
| | Surfactant (parts) | Product name | Polymerizable group | | | | | | | | | |
| | | SR-1025 | 2-Properryl group | 2 | - | - | - | - | - | - | - | - |
| | | BC-2020 | 1-Propenyl group | - | 2 | - | - | 2 | - | - | - | - |
| | | KH-1025 | 2-Propenyl group | - | - | 2 | - | - | 2 | - | - | - |
| | | JS-20 | 2-Propenyl group | - | - | - | 2 | - | - | - | - | - |
| | | PD-104 | Isopropenyl group | - | - | - | - | - | - | 2 | - | - |
| | | RS-3000 | Methacryloyl group | - | - | - | - | - | - | - | 2 | - |
| | | MS-60 | Methacryloyl group | - | - | - | - | - | - | - | - | 2 |
| | Polymerization initiator (parts) | | | 0.03 | 0,03 | 0,03 | 0.03 | 0,03 | 0.03 | 0.03 | 0.03 | 0.03 |
| PSA composition | Composition (parts) | Water dispersion (by non-volatiles) | | 100 | 100 | 100 | 100 | 100 | 100 | - | - | - |
| | | Crosslinking agent | | 2 | 2 | 2 | 2 | 2 | 2 | - | - | - |

(continued)

| Table 3 | | | | Ex. 1B | Ex. 2B | Ex. 3B | Ex 4B | Comp. Ex. 5B | Comp. Ex. 6B | Comp. Ex. 7B | Comp. Ex. 8B | Comp. Ex. 9B . |
|---|---|---|---|---|---|---|---|---|---|---|---|---|
| PSA layer | Gel fraction (%) | | | 92 | 95 | 87 | 87 | n/d | 85 | - | - | - |
| Evaluations | Stability of polymerization | | | G | G | G | G | G | G | P | P | P |
| | Peel strength | O. 3m/min | 23°C ($P_{L23}$) (N/25mm) | 3.0 | 3.1 | 5.2 | 5.0 | 4.5 | 3.9 | - | - | - |
| | | | 0°C ($P_{L0}$) (N/25mm) | 1.5 | 1.4 | 1.2 | 1.1 | 0.6 | 0.3 | - | - | - |
| | | | $P_{L23}/P_{L0}$) | 2.0 | 2.2 | 4.3 | 4.5 | 7.5 | 13 | - | - | - |
| | | 30m/min | 23 °C ($P_{H23}$) (N/25mm) | 1.0 | 1.1 | 1.2 | 1.3 | 1.4 | 1.2 | - | - | - |
| | Anti-marking properties | | | G | G | G | A | A | A | - | - | - |

As shown in Table 3, with respect to the PSA sheets of Examples 1B to 4B using PSA compositions based on acrylic polymers (base polymers) having copolymerization ratios of monomer A1 (2EHA here) of 40 % or greater, or more specifically 55 to 60 %, all showed excellent low-temperature properties with low-temperature low-speed peel strength ($P_{L0}$) at or above 1 N/25mm. These PSA sheets had room temperature low-speed peel strength ($P_{L23}$) a suitable range as surface protection sheets, with the values ranging from 1 N/25mm to 10 N/25mm. With these PSA sheets, the temperature dependence was all small as shown by their peel strength ratios ($P_{L23}/P_{L0}$) of 5 or lower. These PSA sheets showed good ease of removal all with high-speed peel strength ($P_{H23}$) at or below 4 N/25mm. The use of the propenyl group-containing reactive surfactants as the radically polymerizable functional group enabled stable emulsion polymerization of the starting monomer mixtures comprising large amounts of alkyl (meth)acrylates with such higher alkyl groups. The PSA sheets of Examples 1B to 3B using reactive surfactants in ammonium salt forms showed greater anti-marking properties as compared to the PSA sheet of Example 4B using a reactive surfactant in a sodium salt form.

On the other hand, with respect to the PSA sheets of Comparative Examples 5B and 6B using 55 to 60 % BA in place of the monomer A1, all showed low-temperature low-speed peel strength ($P_{L0}$) below 1 N/25mm with the high values of peel strength ratio ($P_{L23}/P_{L0}$) exceeding 7. Also, in view of the anti-marking properties, the PSA sheets of Comparative Examples 5B and 6B fell short of the PSA sheets of Examples 2B and 3B using the same surfactants.

As shown in comparison of Examples 1B to 4B with Comparative Examples 7B to 9B, it has been confirmed that the stability of polymerization is lower with reactive surfactants having an isopropenyl group or a methacryloyl group as the radically polymerizable functional group than with reactive surfactants having a propenyl group.

[Industrial Applicability]

The surface protection sheet according to the present invention is preferable when used in an embodiment where it is adhered to an adherend (an article to be protected) to serve a role to protect the surface of the adherend from damages and removed from the paint film after completed the protective role, with examples of the paint film including metal plates (steel plates, stainless steel plates, aluminum plates, etc.), painted metal plates having paint films on the surfaces (e.g. painted steel plates used for house building materials, other building materials, vehicles such as watercrafts, railroad vehicles and automobiles, etc.), synthetic resin plates, articles molded from these, and so on. It can be preferably used for applications where it is adhered to paint films of objects to be protected (articles having paint films formed by the paint works, e.g. metal plates such as steel plates and molded articles thereof) and protects the paint films from damage such as scratches and dirt, with the objects having been provided with paint works using paints of various compositions such as acrylic paints, polyester-based paints, alkyd-based paints, melamine-based paints, urethane-based paints, acid-epoxy crosslinked paints, and their composites (e.g. acrylic melamine-based paints, alkyd melamine-based paints, etc.).

[Reference Signs List]

1: support substrate
1A: first face (front face)
1B: second face (back face)
2: PSA layer
2A: adhesive face
10: surface protection sheet

## Claims

**1.** A water-dispersed pressure-sensitive adhesive composition for surface protection sheets, with the composition comprising an acrylic polymer and a crosslinking agent, wherein the acrylic polymer is obtained by emulsion polymerization of a starting monomer mixture that satisfies the following:

comprising as a monomer A1 an alkyl acrylate with 6 to 9 alkyl carbons in an amount of 40 % by weight or more of the total monomer content;
comprising as a monomer A2 an alkyl (meth)acrylate having a homopolymer glass transition temperature of -50°C or higher and being represented by the next general formula (M):

$$CH_2=C(R^1)COOR^2 \qquad (M)$$

wherein in the formula (M), $R^1$ is a hydrogen atom or a methyl group, and $R^2$ is an alkyl group with 4 to 20 carbon atoms, wherein the homopolymer glass transition temperature is determined according to methods identified in the description, and wherein the total amount of monomers A1 and A2 accounts for 50 to 99.9 % by weight of all monomers; and
comprising as a monomer B a carboxy group-containing monomer, with the monomer B accounting for 0.1 to 5 % by weight of all monomers;
with the emulsion polymerization being carried out in the presence of a surfactant $S_{AP}$, which is an anionic surfactant having a group selected from a 1-propenyl or a 2-propenyl group.

**2.** The pressure-sensitive adhesive composition according to Claim 1, using an ammonium salt anionic surfactant as the surfactant $S_{AP}$.

**3.** The pressure-sensitive adhesive composition according to Claim 1 or 2, wherein the surfactant $S_{AP}$ is used in an amount of 0.1 to 6 parts by weight relative to 100 parts by weight of the monomers.

**4.** The pressure-sensitive adhesive composition according to any one of Claims 1 to 3, wherein the acrylic polymer has a glass transition temperature of -30 °C or lower, the glass transition temperature being determined according to methods identified in the description.

**5.** The pressure-sensitive adhesive composition according to any one of Claims 1 to 4, wherein monomers having at least one (meth)acryloyl group per molecule account for more than 95 % by weight of all the monomers.

**6.** A surface protection sheet comprising a pressure-sensitive adhesive layer formed by using the pressure-sensitive adhesive composition according to any one of Claims 1 to 5, and a support substrate supporting the pressure-sensitive adhesive layer.

**Patentansprüche**

**1.** Wasserdispergierte druckempfindliche Klebstoffzusammensetzung für Oberflächenschutzfolien, wobei die Zusammensetzung ein Acrylpolymer und ein Vernetzungsmittel umfasst, wobei das Acrylpolymer durch Emulsionspolymerisation einer Ausgangsmonomermischung erhalten wird, welche:

als Monomer A1 ein Alkylacrylat mit 6 bis 9 Alkylkohlenstoffen in einer Menge von 40 Gew.-% des Gesamtmonomergehalts oder mehr umfasst;
als Monomer A2 ein Alkyl(meth)acrylat umfasst, welches eine Homopolymer-Glasübergangstemperatur von -50°C oder höher aufweist und durch die allgemeine Formel (M) dargestellt ist:

$$CH_2=C(R^1)COOR^2 \qquad (M)$$

wobei in der Formel (M) $R^1$ ein Wasserstoffatom oder eine Methylgruppe ist und $R^2$ eine Alkylgruppe mit 4 bis 20 Kohlenstoffatomen ist, wobei die Homopolymer-Glasübergangstemperatur gemäß den in der Beschreibung angegebenen Verfahren bestimmt wird, und wobei die Gesamtmenge der Monomere A1 und A2 50 bis 99,9 Gew.-% aller Monomere ausmacht; und
als Monomer B ein eine Carboxygruppe enthaltendes Monomer umfasst, wobei das Monomer B 0,1 bis 5 Gew.-% aller Monomere ausmacht;
wobei die Emulsionspolymerisation in Gegenwart eines Tensids $S_{AP}$ durchgeführt wird, welches ein anionisches Tensid mit einer Gruppe ist, die aus einer 1-Propenyl- oder einer 2-Propenylgruppe ausgewählt ist.

**2.** Druckempfindliche Klebstoffzusammensetzung gemäß Anspruch 1, wobei ein anionisches Ammoniumsalz-Tensid als Tensid $S_{AP}$ verwendet wird.

**3.** Druckempfindliche Klebstoffzusammensetzung gemäß Anspruch 1 oder 2, wobei das Tensid $S_{AP}$ in einer Menge von 0,1 bis 6 Gewichtsteilen relativ zu 100 Gewichtsteilen der Monomere verwendet wird.

**4.** Druckempfindliche Klebstoffzusammensetzung gemäß einem der Ansprüche 1 bis 3, wobei das Acrylpolymer eine Glasübergangstemperatur von -30°C oder weniger aufweist, wobei die Glasübergangstemperatur gemäß den in

der Beschreibung angegebenen Verfahren bestimmt wird.

**5.** Druckempfindliche Klebstoffzusammensetzung gemäß einem der Ansprüche 1 bis 4, wobei Monomere mit mindestens einer (Meth)acryloylgruppe pro Molekül mehr als 95 Gew.-% aller Monomere ausmachen.

**6.** Oberflächenschutzfolie, umfassend eine druckempfindliche Klebstoffschicht, die unter Verwendung der druckempfindlichen Klebstoffzusammensetzung gemäß einem der Ansprüche 1 bis 5 gebildet wird, und ein Trägersubstrat, das die druckempfindliche Klebstoffschicht trägt.

## Revendications

**1.** Composition d'adhésif sensible à la pression dispersé dans de l'eau pour feuilles de protection de surface, la composition comprenant un polymère acrylique et un agent de réticulation, le polymère acrylique étant obtenu par polymérisation en émulsion d'un mélange de monomères de départ qui satisfait aux conditions suivantes :

comprenant, en tant que monomère A1, un acrylate d'alkyle ayant 6 à 9 atomes de carbone à hauteur de 40% en poids ou plus de la teneur totale en monomères ;
comprenant, en tant que monomère A2, un (méth)acrylate d'alkyle ayant une température de transition vitreuse d'homopolymère supérieure ou égale à -50 °C et représenté par la formule générale (M) suivante :

$$CH_2{=}(C(R^1)COOR^2 \qquad (M)$$

où dans la formule (M), $R^1$ est un atome d'hydrogène ou un groupe méthyle, et $R^2$ est un groupe alkyle ayant 4 à 20 atomes de carbone, la température de transition vitreuse d'homopolymère étant déterminée selon des méthodes identifiées dans la description, et la quantité totale de monomères A1 et A2 représentant de 50 à 99,9 % en poids de tous les monomères ; et
comprenant, en tant que monomère B, un monomère contenant un groupe carboxyle, le monomère B représentant de 0,1 à 5 % en poids de tous les monomères ;
la polymérisation en émulsion étant réalisée en présence d'un tensioactif $S_{AP}$, qui est un tensioactif anionique ayant un groupe choisi parmi un groupe 1-propényle ou 2-propényle.

**2.** Composition d'adhésif sensible à la pression selon la revendication 1, qui utilise un tensioactif anionique à sel d'ammonium en tant que tensioactif $S_{AP}$.

**3.** Composition d'adhésif sensible à la pression selon la revendication 1 ou 2, dans laquelle le tensioactif $S_{AP}$ est utilisé à hauteur de 0,1 à 6 parties en poids pour 100 parties en poids des monomères.

**4.** Composition d'adhésif sensible à la pression selon l'une quelconque des revendications 1 à 3, dans laquelle le polymère acrylique a une température de transition vitreuse inférieure ou égale à -30 °C, la température de transition vitreuse étant déterminée selon des méthodes identifiées dans la description.

**5.** Composition d'adhésif sensible à la pression selon l'une quelconque des revendications 1 à 4, dans laquelle des monomères ayant au moins un groupe (méth)acryloyle par molécule représentent plus de 95 % en poids de tous les monomères.

**6.** Feuille de protection de surface comprenant une couche d'adhésif sensible à la pression formée en utilisant la composition d'adhésif sensible à la pression selon l'une quelconque des revendications 1 à 5, et un substrat de support supportant la couche d'adhésif sensible à la pression.

[Fig. 1]

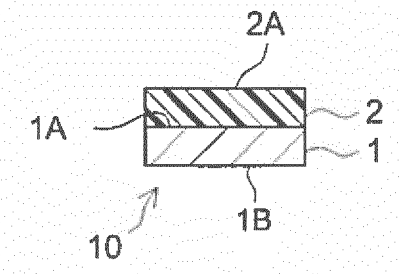

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H673352 B
- JP 2007532744 A
- JP 2012025921 A
- JP H10114887 B
- EP 1586593 A1
- WO 2013080792 A1
- JP 2013159662 A
- EP 2365044 A1
- US 2007231571 A1
- EP 1232802 A2
- EP 2511357 A1
- US 2009120325 A1

### Non-patent literature cited in the description

- Polymer Handbook. John Wiley & Sons, Inc, 1989